(19) Europäisches Patentamt
European Patent Office
Office européen des brevets

(11) **EP 2 810 017 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **13703322.1**

(22) Anmeldetag: **23.01.2013**

(51) Int Cl.:
*G01B 9/02* *(2006.01)*    *G01B 11/02* *(2006.01)*

(86) Internationale Anmeldenummer:
**PCT/EP2013/000204**

(87) Internationale Veröffentlichungsnummer:
**WO 2013/113481 (08.08.2013 Gazette 2013/32)**

(54) **MEHRSKALIGE DISTANZMESSUNG MIT FREQUENZKÄMMEN**

MULTISCALE DISTANCE MEASUREMENT WITH FREQUENCY COMBS

MESURE DE DISTANCE MULTI-ÉCHELLE AVEC PEIGNES DE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2012 DE 102012001754**

(43) Veröffentlichungstag der Anmeldung:
**10.12.2014 Patentblatt 2014/50**

(73) Patentinhaber: **Karlsruher Institut für Technologie (KIT)**
**76131 Karlsruhe (DE)**

(72) Erfinder:
• **KOOS, Christian**
**74936 Siegelsbach (DE)**
• **WEIMANN, Claudius**
**71570 Oppenweiler (DE)**
• **LEUTHOLD, Juerg**
**8173 Neerach (CH)**

(74) Vertreter: **Müller-Boré & Partner**
**Patentanwälte PartG mbB**
**Friedenheimer Brücke 21**
**80639 München (DE)**

(56) Entgegenhaltungen:
**EP-A1- 2 182 319**

• **CODDINGTON I ET AL: "Rapid and precise absolute distance measurements at long range", NATURE PHOTONICS, NATURE PUBLISHING GROUP, UK , Bd. 3 1. Januar 2009 (2009-01-01), Seiten 351-356, XP002675765, ISSN: 1749-4885, DOI: 10.1038/NPHOTON.2009.94 Gefunden im Internet: URL:http://www.nature.com/nphoton/journal/ v3/n6/full/nphoton.2009.94.html [gefunden am 2009-05-24] in der Anmeldung erwähnt**

**Beschreibung**

Die vorliegende Erfindung liegt auf dem Gebiet der optischen Messtechnik und betrifft eine Vorrichtung und ein Verfahren zur hochgenauen optischen Distanzmessung. Ferner betrifft die Erfindung eine Vorrichtung und ein Verfahren zur hochgenauen optischen Geschwindigkeitsmessung mit Frequenzkämmen.

Es sind bereits Verfahren bekannt, die Distanzmessung unter Nutzung zweier Genauigkeitsskalen durchführen. Dabei wird die Distanz zum einen durch Interferometrie bei der Lichtwellenlänge bestimmt, zum anderen durch Mehrwellenlängeninterferometrie mit synthetischen Wellenlängen, die durch den Linienabstand einer Kammquelle definiert sind. Bei dieser Herangehensweise ist der Eindeutigkeitsbereich der Messung durch den Linienabstand der Kammquelle bestimmt und damit in der Regel zu gering für viele praktische Anwendungen. Werden beispielsweise Laser mit einer Wiederholrate von 100 MHz verwendet, ergibt sich für die Distanzmessung ein Eindeutigkeitsbereich von -1,5 m. Diese Verfahren erlauben es zudem nicht, miniaturisierte Frequenzkammquellen, wie zum Beispiel Mikroscheibenresonatoren, für die Distanzmessung zu nutzen. Die Linienabstände liegen hier im Multi-GHz-Bereich und würden somit zu einem technisch unbrauchbaren Eindeutigkeitsbereich von wenigen Millimetern führen. Die Realisierung von miniaturisierten Messapparaten mit den bekannten Vorteilen bzgl. Kompaktheit, Robustheit und Herstellungsaufwand ist damit nicht möglich.

Der geringe Linienabstand bei herkömmlichen Verfahren führt außerdem zu hohen Anforderungen an die Genauigkeit, mit der die Phasen für die Mehrwellenlängeninterferometrie gemessen werden müssen, um in den Eindeutigkeitsbereich der optischen Interferometrie zu gelangen: Die relative Genauigkeit der Phasenmessung ist im wesentlichen durch das Verhältnis von optischer Wellenlänge zu synthetischer Wellenlänge gegeben und liegt bei herkömmlichen Verfahren in der Größenordnung von $10^{-6}$ (z.B. 1,55 $\mu$m optische Wellenlänge, 100 MHz Linienabstand). Dies ist technisch aufwendig. Die Anforderungen können jedoch durch eine Vergrößerung des Linienabstandes drastisch reduziert werden, z.B. auf $10^{-3}$ bei 1,55 $\mu$m optischer Wellenlänge und 100 GHz Linienabstand - vorausgesetzt das damit einhergehende Problem des verringerten Eindeutigkeitsbereiches lässt sich anderweitig lösen.

In EP 2 182 319 A1 wird ein interferometrisches Distanzmessverfahren beschrieben, das auf der Verwendung zweier Frequenzkammquellen mit unterschiedlichen Linienabständen beruht. Dabei durchläuft das Signal des ersten Frequenzkamms die zu messende Distanz und wird anschließend mit Hilfe des zweiten Frequenzkammes kohärent detektiert. Ein mittels Strahlteiler abgetrennter Teil des Signals des ersten Frequenzkamms durchläuft gleichzeitig eine Referenzstrecke und wird anschließend wiederum mit Hilfe des zweiten Frequenzkammes kohärent detektiert. Der jeweils gemessene Photostrom enthält äquidistante spektrale Komponenten. Aus den relativen Phasen einzelner spektraler Komponenten lässt sich der optische Weglängenunterschied zwischen der zu messenden Distanz und der Referenzstrecke berechnen. Der Eindeutigkeitsbereich bei diesem Verfahren ist dabei durch den Linienabstand der ersten Frequenzkammquelle gegeben.

Die Begrenzung des Eindeutigkeitsbereichs auf den Linienabstand des ersten Frequenzkammes erfordert bei kleinem Linienabstand (und entsprechend hohem Eindeutigkeitsbereich) eine hohe Phasenmessgenauigkeit, um in den Fangbereich der optischen Interferometrie zu kommen. Eine Reduzierung der Phasenmessgenauigkeit ist durch die Nutzung eines größeren Linienabstands möglich. Dies führt jedoch zu einem entsprechend verringerten Eindeutigkeitsbereich. Zur Erzielung eines höheren Eindeutigkeitsbereiches wird von den Autoren vorgeschlagen, die Messung gleichzeitig mit einem weiteren Frequenzkammpaar durchzuführen. Durch entsprechende Wahl der Wellenlänge und des Linienabstands wird so ohne Störung des ersten Frequenzkammpaars eine weitere synthetische Wellenlänge erzeugt. Durch die Messung bei zwei synthetischen Wellenlängen kann der Eindeutigkeitsbereich entsprechend erweitert werden. Bei diesem Verfahren sind allerdings vier Frequenzkammquellen erforderlich. Dieses Verfahren ist somit technisch aufwendig und empfindlich bzgl. Phasenfluktuationen der beteiligten Frequenzkämme.

In "Nature Photon 3 (6), S. 351-356, Coddington et al." wird ein Verfahren zur schnellen Distanzmessung beschrieben, das auf der Verwendung zweier Frequenzkammquellen mit unterschiedlichen Linienabständen beruht. Das Signal des ersten Frequenzkamms durchläuft die zu messende Distanz und wird anschließend mit Hilfe des zweiten Frequenzkammes kohärent detektiert. Ein halbdurchlässiger Spiegel im Messpfad generiert ein Referenzsignal, welches ebenso detektiert wird. Der jeweils gemessene Photostrom enthält äquidistante spektrale Komponenten für das Referenz- und das Messsignal. Aus der Frequenzabhängigkeit der relativen Phasen lässt sich der Wegunterschied mit Hilfe einer linearen Anpassung ermitteln. Dabei werden zwei Längenskalen erfasst: Die Steigung der angepassten Geraden erlaubt die Berechnung der Distanz nach dem Prinzip der Mehrwellenlängeninterferometrie, wobei die synthetische Wellenlänge und damit der Eindeutigkeitsbereich durch den Linienabstand der ersten Frequenzkammquelle gegeben ist. Die absolute Position der Geraden ("y-Achsenabschnitt") erlaubt eine interferometrische Distanzmessung bei der optischen Wellenlänge des ersten Frequenzkamms, wenn die absolute optische Wellenlänge des Frequenzkamms bekannt ist. Dies kann z.B. durch Stabilisierung auf einen weiteren Laser (dessen Wellenlänge bekannt sein muss, z.B. durch eine Absorptionszelle oder einen selbst-referenzierenden, oktavenspannenden Frequenzkamm) erfolgen.

Auch bei diesem Verfahren ist der Eindeutigkeitsbereich durch den Linienabstand des ersten Frequenzkammes begrenzt. Die verwendeten Laser mit Wiederholraten von 100 MHz führen zu einem Eindeutigkeitsbereich von 1,5 m.

Der relativ kleine Linienabstand erfordert höhere Messgenauigkeit bei der Phasenmessung der optischen Schwebungen, um in den Fangbereich der Interferometrie zu kommen. Zur Erzielung eines höheren Eindeutigkeitsbereiches wird von den Autoren ein Umschalten zwischen dem lokalen Oszillator (LO) und dem Signallaser vorgeschlagen. Eine gleichzeitige Erfassung aller relevanten Messdaten in einem einzigen Messvorgang ist somit nicht möglich, es sind also zwei Messungen zu verschiedenen Zeitpunkten nötig. Daraus resultieren hohe Anforderungen an die Stabilität der Frequenzkammquellen. Außerdem sind schnelle Messungen zum Beispiel an sich bewegenden Messobjekten durch die Messung zu verschiedenen Zeitpunkten erschwert. Die in der Veröffentlichung beschriebene Distanzmessung an einem sich bewegenden Ziel wurde deshalb innerhalb eines Eindeutigkeitsbereiches der Mehrwellenlängeninterferometrie durchgeführt.

Eine Aufgabe der Erfindung ist es, ein verbessertes Messverfahren bereitzustellen, welches die Mehrwellenlängeninterferometrie insbesondere um eine weitere Größenskala mit höherem Eindeutigkeitsbereich ergänzt.

Die Aufgabe wird durch ein Verfahren mit den im Anspruch 1 angegebenen Merkmalen, eine Vorrichtung mit den im Anspruch 8 angegebenen Merkmalen, ein System zur Messung räumlicher Koordinaten mit den im Anspruch 15 angegebenen Merkmalen sowie eine Verwendung mit den im Anspruch 16 angegebenen Merkmalen gelöst. Bevorzugte Ausführungsformen sind Gegenstand der Unteransprüche.

Gemäß der Erfindung wird ein Verfahren zur optischen Distanz- und optional Geschwindigkeitsmessung vorgeschlagen, umfassend:

ein Erzeugen eines ersten und eines zweiten Frequenzkammsignals, wobei das erste und das zweite Frequenzkammsignal unterschiedliche Linienabstände aufweisen;
eine Referenzmessung umfassend ein Überlagern zumindest eines (ersten) Teils des ersten Frequenzkammsignals und zumindest eines (ersten) Teil des zweiten Frequenzkammsignals in einem Referenzstrahlengang und ein Erfassen des durch den Referenzstrahlengang (bzw. durch die Referenzstrecke) propagierten Überlagerungssignals;
eine erste Messung umfassend ein Überlagern des zumindest eines anderen (zweiten) Teils des ersten Frequenzkammsignals mit zumindest einem anderen (zweiten) Teil des zweiten Frequenzkammsignals, ein Einkoppeln des Überlagerungssignals in einen Messstrahlengang, und ein Erfassen des von einem Messobjekt reflektierten, durch den Messstrahlengang (bzw. durch die Messstrecke) propagierten Überlagerungssignals; und
ein Ermitteln des Wegunterschiedes zwischen dem Referenzstrahlengang und dem Messstrahlengang aus den erfassten Überlagerungssignalen bei der ersten Messung und der Referenzmessung.

Der Messstrahlengang umfasst die zu messende Strecke/Distanz (Messstrecke/Messdistanz), z.B. die zu messende Strecke/Distanz von der letzten ausgangsseitigen Komponente des Messsystems (der Vorrichtung zur Distanz- und/oder Geschwindigkeitsmessung) zu einem festen oder beweglichen Messobjekt. Der Referenzstrahlengang umfasst die Referenzstrecke, z.B. die Referenzstrecke zu einem festen Referenzobjekt.

Das Ermitteln des Wegunterschieds kann eine spektrale Analyse der detektierten Überlagerungssignale (z.B. eine Fourieranalyse) und ein Ermitteln der relativen Phasenlagen ausgewählter spektraler Komponenten der detektierten Überlagerungssignale umfassen, wobei der Wegunterschieds zwischen dem Referenzstrahlengang und dem Messstrahlengang aus den ermittelten relativen Phasenlagen ermittelt wird. Aus dem ermittelten Wegunterschied kann die Distanz zum Messobjekt berechnet werden. Dabei werden nur Signale erfasst, die durch benachbarte Linien beider Kämme entstehen.

Das erfindungsgemäße Verfahren zur Distanzmessung basiert auf der Verwendung von zwei optischen Frequenzkämmen bzw. Frequenzkammsignalen mit verschiedenen Linienabständen. Um den Eindeutigkeitsbereich zu erweitern, wird vorgeschlagen, eine Messung durchzuführen, bei welcher die beiden Frequenzkämme bzw. Frequenzkammsignale zunächst überlagert und somit zur Interferenz gebracht werden. Die überlagerten Frequenzkämme propagieren dann gleichzeitig durch die zu messende Strecke/Distanz (bzw. durch den Messstrahlengang) und werden anschließend zeitlich aufgelöst detektiert. Das entstehende elektrische Signal weist dabei äquidistante spektrale Komponenten auf, deren Abstand der Differenz der Linienabstände entspricht. Die Länge der zu messenden Strecke lässt sich aus den elektrischen Phasen der Schwebungssignale ermitteln. Der Eindeutigkeitsbereich ist dabei durch die Differenz der Linienabstände gegeben. Im Gegensatz zu Verfahren nach dem Stand der Technik ist der Eindeutigkeitsbereich unabhängig von den Linienabständen selbst und kann auch für miniaturisierte Quellen beliebig groß sein. Insbesondere kann die Differenz der Linienabstände der beiden Frequenzkämme auch bei großen Linienabständen beliebig klein sein. Damit lässt sich ein im Prinzip beliebig großer Eindeutigkeitsbereich erreichen, welcher vom Linienabstand der Einzelquellen entkoppelt ist.

Das entsprechende Messsystem kann daher miniaturisiert und die Genauigkeitsanforderungen an die Phasenmessung der Mehrwellenlängeninterferometrie können entschärft werden. Um eine möglichst große Robustheit gegenüber Fluktuationen der Frequenzkämme zu erreichen, können die verschiedenen Größenskalen vorzugsweise in einem einzigen Messvorgang gleichzeitig erfasst werden.

Das durch den Messstrahlengang propagierte Überlagerungssignal kann vor dem Erfassen mit einem anderen Teil des zweiten Frequenzkammsignals, welcher nicht durch den Messstrahlengang propagiert ist, überlagert werden.

Somit ist eine gleichzeitige Ausführung zweier Teilmessungen möglich. Die erste Teilmessung umfasst eine Auswertung beider Frequenzkämme nach einer gemeinsamen Propagation durch den Messstrahlengang. Die zweite Teilmessung umfasst eine Auswertung einer der beiden Frequenzkämme nach einer Propagation durch den Messstrahlengang und einer Überlagerung mit dem zweiten Frequenzkamm, welche allein zur Detektion dient. Wie nachfolgend im Detail beschrieben wird, ist es trotz der gleichzeitigen Ausführung beider Teilmessungen möglich, eine getrennte Auswertung beider Teilmessungen durchzuführen.

Vorzugsweise umfasst das Verfahren eine zweite Messung, wobei die zweite Messung ein Einkoppeln des zumindest einen Teils des ersten Frequenzkammsignals in den Messstrahlengang, ein Überlagern des durch den Messstrahlengang propagierten Teils des ersten Frequenzkammsignals mit einem (durch den Referenzstrahlengang propagierten) Teil des zweiten Frequenzkammsignals, und ein Erfassen des Überlagerungssignals umfasst.

Gemäß der obigen bevorzugten Ausführungsform der Erfindung wird ein neuartiges Verfahren zur Distanzmessung vorgeschlagen, welches auf einem multiskaligen Messprinzip beruht. Dieses Messprinzip kombiniert in vorteilhafter Weise Messverfahren mit großem Eindeutigkeitsbereich und geringer Genauigkeit mit Messverfahren, die einen kleinen Eindeutigkeitsbereich, dafür aber eine hohe Genauigkeit aufweisen. Die Multiskaligkeit der Distanzmessung wird insbesondere durch die gezielte Ausnutzung der Multiskaligkeit der im Überlagerungssignal auftretenden Frequenzkomponenten und deren Differenzfrequenzen erreicht. Zur multiskaligen Distanzbestimmung wird vorgeschlagen, zwei gleichzeitig oder zeitlich getrennte (z.B. kurz nacheinander folgende) (Teil)Messungen durchzuführen, wobei, im Gegensatz zum Stand der Technik, bei mindestens einer der (Teil)Messungen beide Frequenzkämme über die zu messende Strecke propagieren und anschließend detektiert werden. Dadurch kann der Eindeutigkeitsbereich erweitert werden.

Eine hohe Messgenauigkeit kann durch die zweite (Teil)Messung erreicht werden. Bei dieser Messung wird ein Schwebungssignal erfasst, das aus der Überlagerung bzw. Interferenz eines über die Messstrecke bzw. über den Messstrahlengang propagierten Frequenzkammes bzw. Frequenzkammsignals und eines lokal erzeugten, nicht über die Messstrecke propagierten Referenzkammes bzw. Referenzkammsignals entsteht. Beispielsweise kann der über die zu messende Distanz propagierte Frequenzkamm anschließend mit einem Teil des zweiten Frequenzkamms überlagert werden, welcher nicht über die Messstrecke propagiert ist. Die Detektion erfolgt also heterodyn durch Überlagerung zweier Frequenzkämme an dem Detektor. Das Überlagerungssignal (Interferenzsignal) liefert die auf den kleineren Eindeutigkeitsbereich gefaltete Distanz. Zusätzlich lassen sich aus den Messdaten die absoluten Phasen der einzelnen optischen Linien ermitteln, welche eine interferometrische Messung der Distanz zu einem Messobjekt bei der Lichtwellenlänge des durch die Messstrecke propagierten Frequenzkammsignals erlauben. Der Eindeutigkeitsbereich ist dabei durch den Linienabstand desjenigen Kammes definiert, der über die Messstrecke propagiert. Ist die Distanz aus der ersten Teilmessung bereits mit hinreichender Genauigkeit bekannt, verfeinert die zweite Teilmessung die Messung nach dem Prinzip einer Mehrwellenlängeninterferometrie. Bei dieser Messung werden alle synthetischen Wellenlängen berücksichtigt, die durch die Abstände zwischen zwei beliebigen Linien des Kammes gegeben sind. Die größte synthetische Wellenlänge entspricht dabei dem Abstand direkt benachbarter Linien und bestimmt damit den Eindeutigkeitsbereich dieser Teilmessung. Die kleinste synthetische Wellenlänge ist gegeben durch die gesamte optische Bandbreite des ausgewerteten Frequenzkammspektrums.

Die zugehörigen Linienabstände können Werte bis in den THz-Bereich annehmen. Damit lassen sich Genauigkeiten von unter einem Mikrometer erzielen. Ist zusätzlich die Wellenlänge einer Linie des Kammes bekannt, so lässt sich die Distanz aus den erfassten Messdaten auf einer dritten Längenskala bestimmen, deren Eindeutigkeitsbereich und Genauigkeit durch die optische Wellenlänge gegeben sind. So kann das Verfahren für besonders hohe Genauigkeitsanforderungen um eine weitere, sehr feinskalige Messung nach dem Prinzip der optischen Interferometrie ergänzt werden.

Zusätzlich oder alternativ zur Distanzmessung kann insbesondere bei der zweiten Teilmessung die Geschwindigkeitskomponente eines bewegten Messobjekts parallel zum Messstrahl durch die Messung der Dopplerverschiebungen von spektralen Komponenten des detektierten Überlagerungssignals gewonnen werden.

So kann im Messstrahlengang zumindest ein bewegtes Messobjekt enthalten sein. Im Referenzstrahlengang kann zumindest ein festes (d.h. nicht bewegtes) Referenzobjekt enthalten sein. Das Messverfahren kann ferner ein Ermitteln der Geschwindigkeitskomponente des Messobjekts parallel zum Messstrahl anhand der Dopplerverschiebungen von spektralen Komponenten des bei der zweiten Messung detektierten Überlagerungssignals umfassen.

Eine Ermittlung der Geschwindigkeitskomponente parallel zum Messstrahl ist prinzipiell auch bei der ersten Teilmessung möglich; auch hier wird eine Dopplerverschiebung diskreter spektraler Komponenten im Basisband gemessen. Die gemessenen Frequenzänderungen sind jedoch sehr viel kleiner als bei der zweiten Teilmessung, da beide Frequenzkämme einer Dopplerverschiebung unterliegen. Die erwarteten bewegungsbedingten Frequenzverschiebungen liegen in der Größenordnung von wenigen Hertz. Die Erfassung erfordert also eine entsprechend lange Messzeit und sehr schmalbandige Laserquellen (z.B. untereinander phasengekoppelte Frequenzkämme) bzw. einen Algorithmus zur numerischen Kompensation des relativen Phasenrauschens der beiden Kammquellen.

Das Messobjekt kann beispielsweise ein Messreflektor sein, welcher im Messstrahlengang enthalten ist. Das Referenzobjekt kann ein fester, d.h. nicht beweglicher, Referenzreflektor sein, welcher im Referenzstrahlengang enthalten ist.

Mit dem beschriebenen Messverfahren, besonders mit der zweiten Teilmessung, bei der nur der erste Frequenzkamm durch den Messstrahlengang propagiert und am Messobjekt reflektiert wird, um dann zur Detektion mit dem durch den Referenzstrahlengang propagierten zweiten Frequenzkamm überlagert zu werden, lässt sich bei ausreichend genauer Messung der Dopplerverschiebung des am Messobjekt reflektierten Lichts die Relativgeschwindigkeit des Messreflektors bezüglich des festen Referenzobjekts bestimmen.

Dabei ist die Dopplerverschiebung der n-ten Linie des Frequenzkammes gegeben durch

$$\Delta\omega_{Doppler,n} = \frac{v_{rel}}{c}\omega_n \, ,$$

mit $v_{rel}$ als Relativgeschwindigkeit zwischen Mess- und Referenzreflektor und $\omega_n$ als optische Frequenz der n-ten Linie des Frequenzkammes. Bei Überlagerung in der Detektionseinheit mit dem anderen Frequenzkamm ergeben sich elektrische Schwebungssignale, dessen Frequenzen gegenüber einer Referenzmessung um genau den Betrag der geschwindigkeitsabhängigen Dopplerverschiebung verschoben sind. Aus dieser Verschiebung lässt sich mit Kenntnis der absoluten optischen Wellenlänge (hochgenau z.B. möglich durch Referenzierung auf eine Absorptionszelle oder eine selbstreferenzierte Kammquelle) nach der oben angegeben Formel die (relative) Geschwindigkeit ermitteln.

Da die Dopplerverschiebung ferner von der vorliegenden optischen Frequenz abhängt, also für jede einzelne Kammlinie etwas unterschiedlich ist, lässt sich die Relativgeschwindigkeit aus einem linearen Fit auch ohne Kenntnis der absoluten optischen Frequenzen ermitteln. Die Information über den Linienabstand reicht zur Geschwindigkeitsbestimmung aus. Aus dem Vorzeichen der Dopplerverschiebung lässt sich außerdem bestimmen, in welche Richtung sich das Messobjekt bewegt. Das oben beschriebene Verfahren zur Messung der Relativgeschwindigkeit zumindest eines bewegten Messobjekts mittels zweiter Frequenzkämme kann unabhängig von dem Verfahren zur Distanzmessung verwendet werden. Ein weiterer Aspekt der Erfindung betrifft daher ein Verfahren zur optischen Messung der Relativgeschwindigkeit zumindest eines bewegten Messobjekts bezüglich eines festen (d.h. nicht bewegten) Referenzobjekts, umfassend:

- ein Erzeugen eines ersten und eines zweiten Frequenzkammsignals, wobei das erste und das zweite Frequenzkammsignal unterschiedliche Linienabstände aufweisen;
- Überlagen eines am Messobjekt reflektierten Teils des ersten Frequenzkammsignals mit einem am Referenzobjekt reflektierten Teil des zweiten Frequenzkammsignals und Erfassen des Überlagerungssignals;
- Ermitteln der Relativgeschwindigkeit des zumindest einen Messobjekts bezüglich des Referenzobjekts aus der Dopplerverschiebung von spektralen Komponenten des erfassten Überlagerungssignals.

Wie bereits oben ausgeführt, können die erste und die zweite Messung zeitlich nacheinander durchgeführt werden. Die Messdaten für die erste und die zweite Messung können unmittelbar nacheinander erhoben werden, indem z.B. mit Hilfe eines optischen Schalters die beiden Frequenzkämme bzw. Frequenzkammsignale an den entsprechenden Stellen (im Referenzstrahlengang, im Messstrahlengang, vor der entsprechenden Detektionseinrichtung) zur Interferenz gebracht werden.

Die erste und die zweite Messung können ebenfalls zeitgleich durchgeführt werden. Die Messdaten für die erste und die zweite Messung können zeitgleich erhoben werden, indem zum Beispiel das erste Frequenzkammsignal durch den Messarm bzw. durch den Messstrahlengang propagiert, während das zweite Frequenzkammsignal durch eine optische Filtereinheit spektral in einen ersten Anteil und einen zweiten Anteil aufgeteilt wird. Für die erste Messung kann der erste Anteil des zweiten Frequenzkammsignals zunächst mit zumindest einem Teil des ersten Frequenzkammsignals überlagert werden, wobei das Überlagerungssignal dann durch den Messstrahlengang propagiert und anschließend erfasst/detektiert wird. Für die zweite Messung kann zumindest ein Teil des ersten Frequenzkammsignals erst nach Durchlaufen des Messarmes bzw. des Messstrahlengangs mit dem zweiten Anteil des zweiten Frequenzkammsignals zur Interferenz gebracht werden und anschließend das Interferenzsignal erfasst/detektiert werden.

Die Messdaten für die erste und die zweite Messung können ebenfalls zeitgleich erhoben werden, indem für die Detektion ein differentieller Detektor eingesetzt wird. Für die erste Messung propagieren zumindest ein Teil des ersten Frequenzkammsignals und zumindest ein Teil des zweiten Frequenzkammsignals gemeinsam durch den Messstrahlengang, werden mit einem anderen Teil des zweiten Frequenzkamms überlagert und anschließend mittels des differentiellen Detektors erfasst/detektiert. Das Summensignal des differentiellen Detektors ermöglicht die Auswertung der ersten Messung und das Differenzsignal die Auswertung der zweiten Messung.

Der Referenzstrahlengang kann beispielsweise vollständig im Messstrahlengang enthalten sein. Die Längen der Referenzstrecke und der Messstrecke können getrennt gewonnen werden, indem eine zeitliche Fensterung des detektierten Überlagerungssignals, eine Fourieranalyse des Spektrums des Überlagerungssignals oder eine Anpassung einer Modellfunktion an das detektierte Überlagerungssignal oder dessen Spektrum durchgeführt wird. Insbesondere kann die Unterscheidung zwischen der Referenzmessung und der eigentlichen Messung (der ersten Messung und/oder der zweiten Messung) durch eine entsprechende Wahl von Zeitfenstern des aufgenommenen Überlagerungssignals erreicht werden. Alternativ oder zusätzlich dazu kann das Spektrum des detektierten Überlagerungssignals einer diskreten Fouriertransformation unterzogen und damit die Distanzinformationen aus dem Referenzsignal und dem Messsignal getrennt gewonnen werden. Eine weitere Möglichkeit zur Trennung der Distanzinformation stellt die Anpassung einer Modellfunktion an das detektierte Überlagerungssignal oder dessen Spektrum dar.

Mit dem Verfahren zur Distanzmessung lassen sich ferner die Abstände zu mehreren, sich im Messstrahlengang befindlichen Reflektoren ermitteln, die jeweils einen Teil der abgestrahlten optischen Leistung in das Messsystem zurückreflektieren. Auf diese Weise lassen sich mit einer einzigen Messung die Distanzen zu mehreren, in einem aufgeweiteten Messstrahl befindlichen Reflektoren bestimmen. Durch eine Trilateration lässt sich daraus die Position des Messsystems relativ zu den Reflektoren ermitteln.

Die verwendeten Frequenzkammquellen können freilaufende Frequenzkammquellen sein, d.h. die Frequenzkammquellen sind ohne eine gesonderte Stabilisierung gegeneinander für die Distanz- und/oder Geschwindigkeitsmessung nutzbar.

Die Erfindung betrifft weiter eine Vorrichtung zur optischen Distanz- und/oder Geschwindigkeitsmessung, welche ausgelegt ist, das erfindungsgemäße Verfahren zur Distanz- und/oder Geschwindigkeitsmessung durchzuführen.

Die Vorrichtung umfasst eine erste und eine zweite optische Frequenzkammquelle, welche ausgelegt sind, jeweils ein erstes Frequenzkammsignal und ein zweites Frequenzkammsignal zu emittieren, wobei sich die Linienabstände des ersten Frequenzkammsignals und des zweiten Frequenzkammsignals voneinander unterscheiden. Die Vorrichtung umfasst ferner einen Referenzstrahlengang, einen Messstrahlengang und eine Detektionseinrichtung. Die Detektionseinrichtung ist derart ausgelegt, um Überlagerungssignale der Frequenzkammsignale im Basisband zu erfassen. Die Detektionseinrichtung kann insbesondere ausgelegt werden, Überlagerungssignale der beiden Frequenzkammsignale zeitlich aufgelöst zu detektieren. Die Detektionseinrichtung kann eine oder mehrere Detektoreinheiten umfassen, welche jeweils den durch den Referenzstrahlengang propagierten (optischen) Überlagerungssignals und den von einem Messobjekt reflektierten, durch den Messstrahlengang propagierten (optischen) Überlagerungssignals (welcher vor dem Erfassen bzw. vor der Detektion zusätzlich mit einem weiteren Teil des ersten und/oder des zweiten Frequenzkammsignals überlagert werden kann) erfassen/detektieren.

Die Vorrichtung ist derart ausgelegt, dass zumindest ein (erster) Teil des ersten Frequenzkammsignals und ein (erster) Teil des zweiten Frequenzkammsignals im Referenzstrahlengang überlagert werden, wobei das durch den Referenzstrahlengang (bzw. durch die Referenzstrecke) propagierte Überlagerungssignal von der Detektionseinrichtung erfasst wird. Ferner werden zumindest ein anderer (zweiter) Teil des ersten Frequenzkammsignals und zumindest ein anderer (zweiter) Teil des zweiten Frequenzkammsignals überlagert und in den Messstrahlengang eingekoppelt. Das durch den Messstrahlengang (bzw. durch die Messstrecke) propagierte Überlagerungssignal wird von der Detektionseinrichtung erfasst.

Die Frequenzkammquellen können Laser sein, insbesondere modengekoppelten (femtosekunden) Laser. Diese Frequenzkammquellen erzeugen Frequenzkämme mit kleineren Linienabständen. Die Frequenzkammquellen können auch miniaturisierte Frequenzkammquellen sein. Diese können beispielsweise auf modengekoppelten Laserdioden oder nichtlinear-optischen Wechselwirkungen in Mikroresonatoren beruhen. Derartige Frequenzkammquellen erzeugen üblicherweise Frequenzkammsignale mit größeren Linienabständen. Des Weiteren lassen sich Frequenzkämme durch eine zeitliche periodische Modulation eines monochromatischen optischen Signals erzeugen. Dies kann durch integrierte Modulatoren erfolgen. Besonders günstig stellt sich in diesem Zusammenhang die Verwendung von Silizium als gemeinsame Integrationsplattform für elektronische und optische Komponenten dar. Die Wiederholrate der Frequenzkammquellen

$$f_r = \frac{\omega_r}{2\pi}$$

(und somit der Linienabstand der einzelnen Frequenzkämme) kann prinzipiell beliebige Werte annehmen. Bevorzugt liegt die Wiederholrate zwischen 50 MHz und 1 THz; weiter bevorzugt zwischen 1 GHz und 500

$$\Delta f_r = \frac{\Delta \omega_r}{2\pi}$$

der

GHz und besonders bevorzugt zwischen 10 GHz und 100 GHz. Die Differenz der Wiederholraten beiden Frequenzkammsignale liegt vorzugsweise zwischen 1 kHz und 5 GHz, besonders bevorzugt zwischen 10 kHz und 500 MHz und bestimmt den Linienabstand des erfassten elektrischen Schwebungssignals.

Die Wellenlänge der von den Frequenzkammquellen emittierten Frequenzkammsingale liegt vorzugsweise zwischen 400 nm und 2000 nm, weiter bevorzugt zwischen 500 nm und 1700 nm und besonders bevorzugt zwischen 1100 nm und 1700 nm.

Die Frequenzkammquellen müssen prinzipiell nicht relativ zueinander stabilisiert sein. Wichtig ist nur eine gegenseitige Kohärenzzeit, welche größer ist als die Messzeit zur Aufnahme eines Spektrums. Dies ist mit den oben erwähnten Kammquellen und den erwarteten Messraten realistisch erreichbar. Spektral betrachtet ist die Anforderung an die Laserquellen eine relative Linienbreite der einzelnen Kammlinien zueinander, die kleiner ist als die Messrate. Ein langsamer gegenseitiger Frequenzdrift der Linien kann durch Analyse der Detektorsignale nachverfolgt werden und stellt mit einer entsprechenden Signalverarbeitung keine Einschränkung der Distanz- und optional Geschwindigkeitsmessung dar.

Die Aufteilung der jeweiligen Frequenzkammsignale, die Kopplung und Überlagerung der einzelnen Frequenzkammsignale oder Teile der Frequenzkammsignale sowie die Führung der Frequenzkammsignale oder Teile der Frequenzkammsignale in den einzelnen optischen Pfaden bzw. Strahlen- und Detektionsgängen der Vorrichtung kann mittels geeigneten optischen Elementen erzielt werden, wie z.B. Strahlteiler bzw. Leistungsteiler, optische Schalter, optische Filter, Spiegel, Linsen, etc..

Die Vorrichtung kann ferner eine Datenverarbeitungseinheit umfassen, welche ausgelegt ist, den Wegunterschied zwischen dem Referenzstrahlengang und dem Messstrahlengang aus den detektierten Überlagerungssignalen zu ermitteln. Der Wegunterschied kann insbesondere aus den relativen Phasenlagen der Überlagerungssignale, welche mittels einer spektralen Analyse der detektierten Überlagerungssignale (z.B. einer Fourieranalyse) bestimmt werden können, berechnet werden. Aus dem ermittelten Wegunterschied kann die zu messende Distanz zum zumindest einen Messobjekt ermittelt werden. Die Datenverarbeitungseinheit kann entsprechend programmierte Computer, spezialisierte Hardware und/oder Computernetze oder Computersysteme umfassen, welche die entsprechenden Berechnungen der Distanz aus den erfassten (elektrischen) Signalen durchführen. Ferner kann die Datenverarbeitungseinheit Speichermittel, in welchen Zwischen- und Endergebnisse gespeichert werden können, sowie zumindest eine grafische, vorzugsweise interaktive, Benutzerschnittstelle (GUI) zur Ausgabe der ermittelten Distanzdaten, umfassen. Die Datenverarbeitungseinheit kann in Signalverbindung mit der Detektionseinrichtung stehen.

Die Vorrichtung kann ferner derart ausgelegt werden, dass das durch den Messstrahlengang bzw. durch die Messstrecke propagierte Überlagerungssignal erst mit dem der Detektionseinrichtung zugeführten Anteil des zweiten Frequenzkammsignals überlagert und dann anschließend erfasst wird. Dies ermöglicht insbesondere die gleichzeitige Erfassung der Messdaten aus den oben beschriebenen ersten und zweiten Teilmessungen (z.B. mit einem differentiellen Detektor).

Die Vorrichtung kann insbesondere derart ausgelegt werden, dass der Anteil des zweiten Frequenzkammsignals, welcher der Detektionseinrichtung zugeführt wird, mit dem durch den Messstrahlengang propagierten Anteil des ersten Frequenzkammsignals überlagert werden kann, wobei das Überlagerungssignal von der Detektionseinrichtung erfasst wird. Die Vorrichtung ist somit geeignet, multiskalige Distanzmessungen durchzuführen, bei welchen sowohl der Eindeutigkeitsbereich als auch die Genauigkeit der Messung erhöht werden können.

Wie oben ausgeführt, kann die Vorrichtung zumindest einen Strahlteiler, einen Leistungsteiler, einen optischen Schalter, einen spektralen Filter und/oder einen Zirkulator umfassen, um Teile der Frequenzkammsignale abzuzweigen, dem Referenz- und/oder dem Messstrahlengang zuzuführen und an die entsprechenden Stellen im Referenzstrahlengang, im Messstrahlengang und/oder vor oder an der Detektionseinrichtung zu überlagern und/oder zur Interferenz zu bringen. Ferner kann die Vorrichtung andere optische Elemente, wie z.B. Linsen, Spiegel, spektrale oder räumliche Filter, Modulatoren, etc. umfassen. Die optischen Pfade der einzelnen Signale durch die Vorrichtung zur optischen Distanzmessung können unterschiedlich konfiguriert sein.

Insbesondere kann die Vorrichtung ferner eine Verzweigungseinheit umfassen, welche ausgelegt ist, zumindest einen Teil des zweiten Frequenzkammsignals zumindest teilweise dem Messstrahlengang und zumindest teilweise der Detektionseinrichtung zuzuführen.

Die Teilung zumindest eines Teils des zweiten Frequenzkammsignals in zwei weitere Teile, welche jeweils dem Messstrahlengang und der Detektionseinrichtung zugeführt werden, kann zum Beispiel mittels eines oder mehreren optischen Leistungsteiler erfolgen. Die Verzweigungseinheit kann dementsprechend zumindest einen Leistungsteiler umfassen oder aus einem Leistungsteiler bestehen.

Die Teilung zumindest eines Teils des zweiten Frequenzkammsignals in zwei weitere Teile, welche jeweils dem Messstrahlengang und der Detektionseinrichtung zugeführt werden, kann ebenfalls mittels eines optischen Filters erfolgen, welcher derart ausgelegt ist, um zumindest einen Teil des zweiten Frequenzkammsignals spektral in zumindest einen ersten und einen zweiten spektralen Anteil aufzuteilen. Die einzelnen spektralen Teile können dann den unterschiedlichen Pfaden zugeordnet werden. Die Verzweigungseinheit kann dementsprechend zumindest einen optischen (spektralen) Filter umfassen oder aus einem optischen (spektralen) Filter bestehen.

Die Teilung zumindest eines Teils des zweiten Frequenzkammsignals in zwei weiteren Teile, welche jeweils dem Messstrahlengang und der Detektionseinrichtung zugeführt werden, kann ebenfalls mittels eines (oder mehreren) optischen Schalters erfolgen. Der optische Schalter kann insbesondere derart ausgelegt sein, dass in einer ersten Stellung zumindest ein Teil des zweiten Frequenzkammsignals dem Messstrahlengang zugeführt wird, und in einer zweiten Stellung zumindest ein Teil des zweiten Frequenzkammsignals der Detektionseinrichtung zugeführt wird. In diesem Fall können die einzelnen Messungen zeitlich nacheinander durchgeführt werden. Die Detektionseinrichtung kann einen differentiellen Detektor umfassen, dessen Ausgangssignale für die verschiedenen Stellungen des Schalters getrennt ausgelesen werden können. Die Verzweigungseinheit kann dementsprechend zumindest einen optischen Schalter umfassen oder aus eine optischen Schalter bestehen.

Die Detektionseinrichtung kann mehrere getrennte bzw. einzelne Detektoren (z.B. Photodioden) und/oder zumindest einen differentiellen Detektor, dessen Summen- und Differenzsignal getrennt auslesbar sind, umfassen. Der differentielle Detektor kann z.B. einen Koppler, zwei Photodioden, eine Subtraktionseinheit und eine Additionseinheit für die elektrischen Signale der Photodioden umfassen. Die Abtastrate bei der Detektion kann vorzugsweise zwischen 500 kS/s und 30 GS/s, besonders bevorzugt zwischen 10 MS/s und 10 GS/s liegen. Die Detektionseinrichtung kann zum Beispiel zwei oder mehrere Detektoreinheiten umfassen, wobei eine der Detektoreinheiten das Überlagerungssignal bei der Referenzmessung und eine der Detektoreinheiten die Überlagerungssignale bei den ersten und zweiten Messungen erfasst bzw. detektiert.

Die Detektionseinrichtung kann ferner Verstärker, Filter und andere elektronische Komponenten umfassen. Die Detektionseinrichtung kann beispielsweise analog-elektrische Signalverarbeitungseinheiten umfassen, welche ausgelegt sind, das Signal vor der Abtastung und AD-Wandlung aufzubereiten.

Der Referenzstrahlengang kann vollständig im Messstrahlengang enthalten sein. Dies kann durch Anbringen bzw. Anordnen von einem oder mehreren teildurchlässigen Spiegel im Referenzstrahlengang erzielt werden. Die Unterscheidung zwischen der Referenzmessung und der eigentlichen Messung (der ersten Messung und/oder der zweiten Messung) kann durch eine entsprechende Wahl von Zeitfenstern des aufgenommenen Überlagerungssignals erreicht werden. Alternativ oder zusätzlich dazu kann das Spektrum des detektierten Überlagerungssignals einer diskreten Fouriertransformation unterzogen und damit die Distanzinformation aus dem Referenzsignal und dem Messsignal getrennt gewonnen werden. Eine weitere Möglichkeit zur Trennung der Distanzinformation stellt die Anpassung einer Modellfunktion an das detektierte Überlagerungssignal oder dessen Spektrum dar.

Die Vorrichtung kann derart ausgelegt werden, dass der ausgesandte Messstrahl bzw. Messsignal mehrere Reflektoren trifft, deren Distanzen zum Messsystem in einer Messung bestimmt werden.

Zusätzlich oder alternativ zur Distanzmessung kann die Vorrichtung zur Messung der Geschwindigkeitskomponente eines bewegten Messobjekts parallel zum Messstrahl ausgelegt sein.

So kann der Messstrahlengang zumindest ein bewegtes Messobjekt und der Referenzstrahlengang ein festes Referenzobjekt enthalten. Die Vorrichtung kann ferner derart ausgelegt sein, dass

zumindest ein Teil des ersten Frequenzkammsignals durch den Messstrahlengang propagiert und am Messobjekt reflektiert wird; und

der am Messobjekt reflektierte Teil des ersten Frequenzkammsignals mit einem durch den Referenzstrahlengang propagierten und am Referenzobjekt reflektierten Teil des zweiten Frequenzkammsignals überlagert wird, wobei das Überlagerungssignal von der Detektionseinrichtung erfasst wird.

Die Datenverarbeitungseinheit kann ferner derart ausgelegt sein, die relative Geschwindigkeit des zumindest einen Messobjekts bezüglich des Referenzobjekts aus der Dopplerverschiebung von spektralen Komponenten des erfassten Überlagerungssignals zu ermitteln.

Die Messung der Relativgeschwindigkeit zumindest eines bewegten Messobjekts kann unabhängig von einer Distanzmessung erfolgen. Ein weiterer Aspekt der Erfindung betrifft daher eine Vorrichtung zur optischen Messung der Relativgeschwindigkeit zumindest eines bewegten Messobjekts bezüglich eines festen (d.h. nicht bewegten) Referenzobjekts, umfassend

eine erste optische Frequenzkammquelle, welche ausgelegt ist, ein erstes Frequenzkammsignal zu emittieren;

eine zweite optische Frequenzkammquelle, welche ausgelegt ist, ein zweites Frequenzkammsignal zu emittieren, wobei sich die Linienabstände des ersten Frequenzkammsignals und des zweiten Frequenzkammsignals voneinander unterscheiden;

einen Referenzstrahlengang, welcher ein festes Referenzobjekt enthält;

einen Messstrahlengang, welcher zumindest ein bewegtes Messobjekt enthält;

eine Detektionseinrichtung, welche ausgelegt ist, um Überlagerungssignale der Frequenzkämme im Basisband zu erfassen;

eine Datenverarbeitungseinheit,

wobei die Vorrichtung derart ausgelegt ist, dass

zumindest ein Teil des ersten Frequenzkammsignals durch den Messstrahlengang propagiert und am Messobjekt reflektiert wird;

der am Messobjekt reflektierte Teil des ersten Frequenzkammsignals mit einem, durch den Referenzstrahlengang propagierten und am Referenzobjekt reflektierten Teil des zweiten Frequenzkammsignals überlagert wird, wobei das Überlagerungssignal von der Detektionseinrichtung erfasst wird, und
wobei die Datenverarbeitungseinheit derart ausgelegt ist, die relative Geschwindigkeit des zumindest einen Messobjekts bezüglich des Referenzobjekts aus der Dopplerverschiebung von spektralen Komponenten des erfassten Überlagerungssignals zu ermitteln.

Das erfindungsgemäße Verfahren zur Distanzmessung sowie die entsprechende erfindungsgemäße Vorrichtung können zum Beispiel nach dem Prinzip der Trilateration zur Messung räumlicher Koordinaten verwendet werden.

Eine weitere bevorzugte Ausführungsform der Erfindung betrifft ein System zur Messung räumlicher Koordinaten zumindest eines Messobjekts umfassend zumindest zwei Vorrichtungen zur (multiskaligen) Distanzmessung nach einem bevorzugten Beispiel der Erfindung. Das System ist insbesondere ausgelegt, räumliche Koordinaten des zumindest eines Messobjekts nach dem Prinzip der Trilateration aus den durch die Vorrichtungen zur (multiskaligen) optischen Distanzmessung erfassten Distanzdaten zu ermitteln.

Das erfindungsgemäße Verfahren und die erfindungsgemäße Vorrichtung zur optischen Distanz- und/oder Geschwindigkeitsmessung ermöglichen Distanzmessungen mit einer hohen Genauigkeit (z.B. einer Genauigkeit von unter 100 nm) über prinzipiell beliebig große Strecken bis in den Kilometerbereich. Dies wird durch die erfindungsgemäße Kombination verschiedener Messprinzipien in ein und derselben Messvorrichtung erreicht. Das Verfahren ist mit Frequenzkammquellen mit prinzipiell beliebig großem Linienabstand durchführbar; damit kommen auch miniaturisierte Quellen mit großem Linienabstand in Betracht. Das erfindungsgemäße Verfahren und die erfindungsgemäße Vorrichtung zur optischen Distanz- und/oder Geschwindigkeitsmessung können in allen Bereichen der industriellen Messtechnik, insbesondere in der Maschinenbau- und Automobilbranche, sowie der Luft- und Raumfahrt zum Einsatz kommen. Insbesondere kann die Erfindung zur hochpräzisen Vermessung großvolumiger Teile und zur Überwachung von Fertigungstoleranzen, zum Beispiel innerhalb einer Fertigungslinie ("Inline-Messtechnik") oder in der Qualitätssicherung eingesetzt werden. Da die Erfindung den Einsatz integrierter Frequenzkammquellen mit einer hohen Robustheit gegenüber mechanischen Einwirkungen ermöglicht, können das erfindungsgemäße Verfahren und die erfindungsgemäße Vorrichtung direkt innerhalb der industriellen Fertigungslinie zum Einsatz kommen.

Eine präzise Distanzvermessung mit den erfindungsgemäßen Verfahren und Vorrichtungen ermöglicht ferner die Erstellung sehr präziser CAD-Modelle und kann zum Beispiel zum "Reverse Engineering" eingesetzt werden. Ferner kann das erfindungsgemäße Verfahren und die erfindungsgemäße Vorrichtung zur Distanzmessung für die Distanzmessung zwischen Satelliten im Formationsflug verwendet werden. Je nach Aufgabe der Satelliten ist die genaue Kenntnis ihrer Relativpositionen nötig. Die Einführung von miniaturisierten Frequenzkammquellen mit großen Linienabständen in Kombination mit dem erfindungsgemäßen Messverfahren erlaubt außerdem die Verkleinerung und Kostensenkung derartiger Messsysteme.

Ferner kann die erfindungsgemäße Vorrichtung zum Beispiel als Teil einer Koordinatenmessmaschine zur Referenzierung eines Tastkopfes eingesetzt werden, oder als Hauptkomponente einer optischen Koordinatenmessmaschine und/oder eines Positionsmesssystems. Eine weitere Anwendungsmöglichkeit ergibt sich im Bereich von Werkzeugmaschinen. Diese beruhen derzeit noch auf hochpräzisen, damit sehr aufwendigen und teuren Kinematiken. Mit Hilfe eines schnellen, zuverlässigen Koordinatenmesssystems können flexiblere, beispielsweise Roboterbasierte Kinematiken zum Einsatz kommen, bei denen die erforderliche Genauigkeit über einen entsprechenden Regelmechanismus erreicht wird. Das erfindungsgemäße Verfahren und die erfindungsgemäße Vorrichtung können in diesem Zusammenhang aufgrund der hohen Genauigkeit, Robustheit und Schnelligkeit eine wichtige Rolle spielen.

Weitere Aufgaben, Merkmale und Vorteile der vorliegenden Erfindung werden offensichtlich aus der folgenden detaillierten Beschreibung bevorzugter Ausführungsformen der vorliegenden Erfindung mit Bezug auf die Zeichnungen, in welchen zeigt:

Fig. 1     eine Vorrichtung zur Distanzmessung gemäß einem ersten Beispiel der Erfindung;
Fig. 2     die Leistungsdichtespektren der jeweils von den Frequenzkammquellen abgegebenen Signale und des Überlagerungssignals;
Fig. 3     das Spektrum des elektrischen Schwebungssignals;
Fig. 4     den bei der ersten Messung ermittelten Phasenunterschied $\Delta\Phi_I(n)$;
Fig. 5     den bei der zweiten Messung ermittelten Phasenunterschied $\Delta\Phi_{II}(n)$;
Fig. 6     einen beispielhaften differentiellen Detektor
Fig. 7     eine Vorrichtung zur Distanzmessung gemäß einem zweiten Beispiel der Erfindung;
Fig. 8     eine Vorrichtung zur Distanzmessung gemäß einem dritten Beispiel der Erfindung;
Fig. 9     eine Vorrichtung zur Distanzmessung gemäß einem viertem Beispiel der Erfindung;
Fig.10     die Lesitungsdichtespektren der jeweils von den Frequenzkammquellen abgegebenen Signale und des Überlagerungssignals bei einer Messung mittels einer spektralen Trennung der Signale;
Fig. 11     eine Vorrichtung zur Distanzmessung gemäß einem fünften Beispiel der Erfindung;
Fig. 12     das Differenzsignal am Ausgang der Subtraktionseinheit bei der in Fig. 11 gezeigten Vorrichtung zur Distanzmessung;

Fig. 13 die Amplitude des Signals aus der Fourieranalyse des Summensignals am Ausgang der Additionseinheit bei der in Fig. 11 gezeigten Vorrichtung zur Distanzmessung;

Fig. 14 den prinzipiellen Aufbau eines Systems zur Messung der Koordinaten eines Messobjekts gemäß einem ersten Beispiel;

Fig. 15 den prinzipiellen Aufbau eines Systems zur Messung der Koordinaten eines Messobjekts gemäß einem zweiten Beispiel;

Fig. 16 den prinzipiellen Aufbau eines Systems zur Messung der Koordinaten eines Messobjekts gemäß einem dritten Beispiel;

Fig. 17 den prinzipiellen Aufbau eines Systems zur Messung der räumlichen Position eines Messobjekts gemäß einem vierten Beispiel;

Fig. 18 den prinzipiellen Aufbau eines Systems zur Messung der räumlichen Position eines Messobjekts gemäß einem fünften Beispiel;

Fig. 19 die Leistungsdichtespektren der jeweils von den Frequenzkammquellen emittierten optischen Frequenzkammsignale und das Spektrum des detektierten elektrischen Überlagerungssignals als Funktion der Frequenz $\omega_{el}$ bei einer Geschwindigkeitsmessung;

Fig. 20 den Dopplershift der einzelnen Linien als Funktion der jeweiligen Frequenz der Linien.

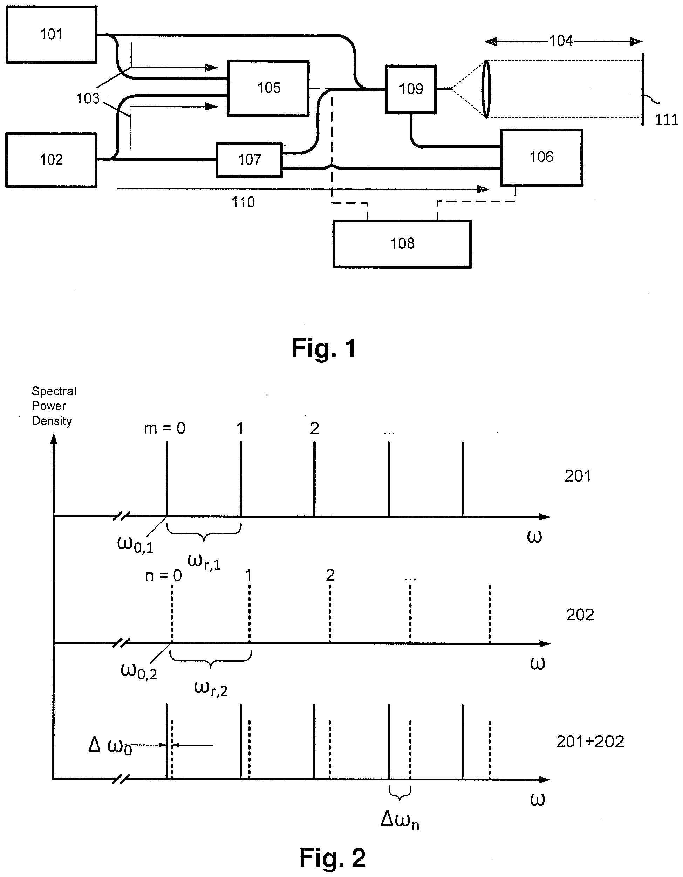

**Figur 1** zeigt eine beispielhafte Vorrichtung zur Distanzmessung gemäß einem ersten Beispiel der Erfindung. Die Vorrichtung zur Distanzmessung umfasst die folgenden Komponenten:

- Frequenzkammquellen 101 und 102,
- Referenzstrahlengang 103,
- Messstrahlengang (die zu messende Strecke) 104, welcher ein Messobjekt (z.B. Messreflektor) 111 enthält,
- Detektionseinrichtung umfassend zwei Detektoreinheiten 105 und 106,
- optische Verzweigungseinheit 107,
- Datenverarbeitungseinheit 108,
- Strahlteilerelement oder Zirkulator 109.

Bei der in Fig. 1 gezeigten Vorrichtung zur Distanzmessung umfasst der Messstrahlengang 104 die zu messende Strecke, d.h. die Strecke zwischen der letzten ausgangsseitigen Komponente der Vorrichtung (der Kollimatorlinse in Fig. 1) und dem Messobjekt 111.

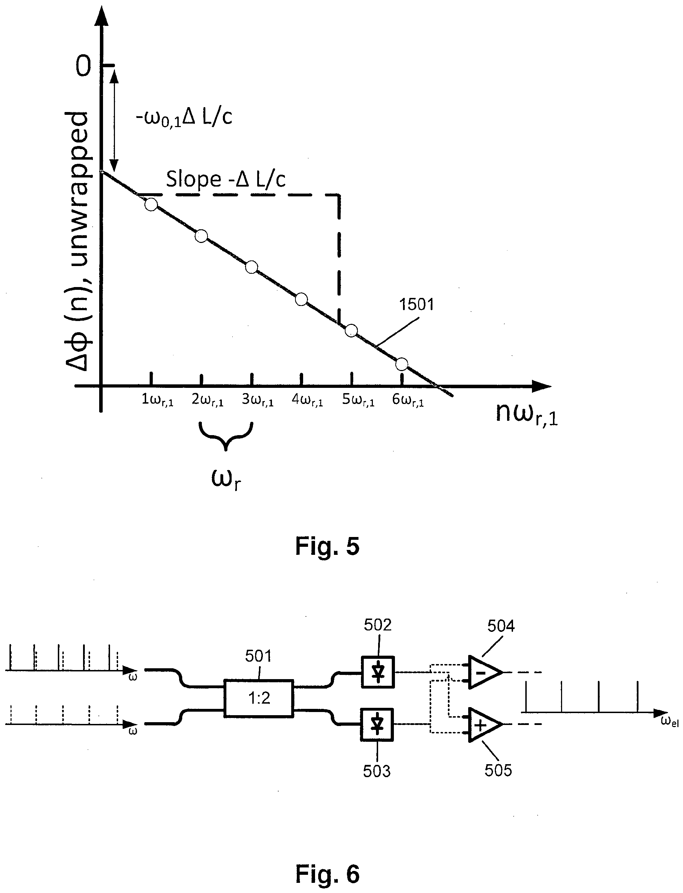

Die optische Verzweigungseinheit 107 kann je nach Ausführungsform z.B. einen optischen Filter, einen optischen Leistungsteiler oder einen optischen Umschalter umfassen. Jede der Detektoreinheiten 105 und 106 umfasst mindestens eine Photodiode mit entsprechender Ansteuerung oder z.B. einen differentiellen Detektor wie in Figur 6 gezeigt. Die Vorrichtung kann ebenfalls weitere optische Elemente zur Aufteilung der jeweiligen Frequenzkammsignale (z.B. in die für die Referenzmessung erforderlichen Signale), zur Führung der Frequenzkammsignale oder Teile der Frequenzkammsignale in den einzelnen optischen Pfaden bzw. Strahlen- und Detektionsgängen, zur Überlagerung der einzelnen Frequenzkammsignale oder Teile der Frequenzkammsignale, etc. Die optischen Elemente können z.B. Strahlteiler bzw. Leistungsteiler, optische Schalter, optische Filter, Spiegel, Linsen, etc., sein.

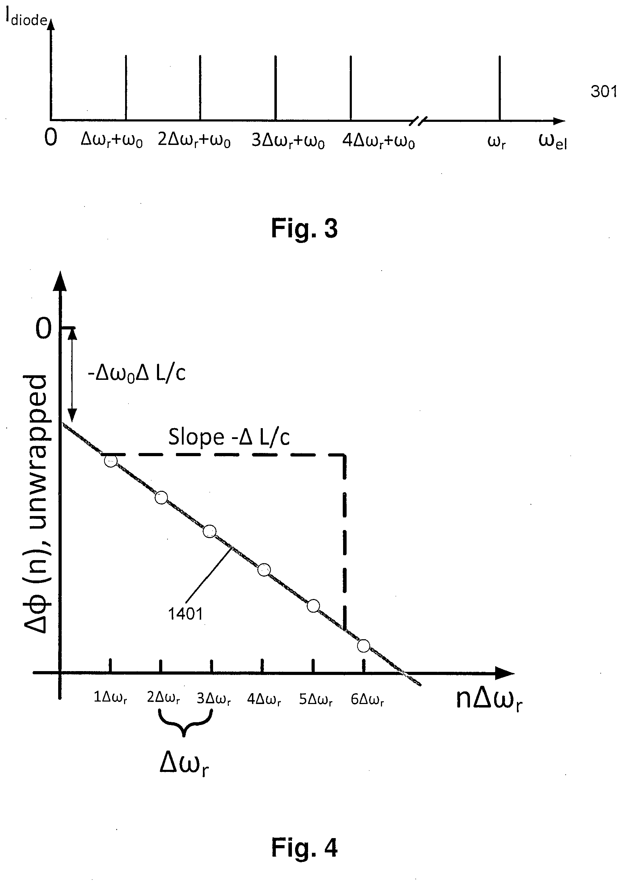

**Figur 2** zeigt die Leistungsdichtespektren (d.h. die spektrale Leistungsdichte als Funktion der Frequenz $\omega$) der jeweils von den Frequenzkammquellen 101 und 102 emittierten optischen Frequenzkammsignale 201 und 202 und des Überlagerungssignals 201+202. **Figur 3** zeigt das Spektrum $I_{diode}$ des detektierten elektrischen Überlagerungssignals 201+202 als Funktion der Frequenz $\omega_{el}$.

Zur multiskaligen Distanzbestimmung können zwei Teilmessungen gleichzeitig oder zeitlich kurz nacheinander durchgeführt werden, wobei, im Gegensatz zum Stand der Technik, bei mindestens einer der Teilmessungen beide Frequenzkämme 201 und 202 gleichzeitig über die zu messende Strecke 104 propagieren und anschließend detektiert werden (vgl. z.B. Figuren 1 und 2). Das entstehende elektrische Signal 301 weist dabei äquidistante spektrale Komponenten auf, deren Abstand der Differenz der Linienabstände der beiden Frequenzkämme entspricht, wie in **Figur 3** gezeigt. Die Länge der zu messenden Strecke lässt sich aus den elektrischen Phasen dieser Schwebungssignale ermitteln. Da die Differenz der Linienabstände der beiden Frequenzkämme auch bei großen Linienabständen beliebig klein sein kann, lässt sich ein im Prinzip beliebig großer Eindeutigkeitsbereich erreichen, der vom Linienabstand der einzelnen Frequenzkammsignale entkoppelt ist.

Eine hohe Messgenauigkeit kann durch die zweite Teilmessung erhalten werden. Bei dieser Teilmessung wird ein Schwebungssignal erfasst, das aus der Überlagerung eines über die Messstrecke propagierten Frequenzkammes (z.B. zumindest eines Teils des Signals 201) und eines lokal erzeugten, nicht über die Messstrecke propagierten Referenzkammes (z.B. zumindest eines Teils des Signals 202) entsteht. Die Detektion erfolgt heterodyn durch Überlagerung der zwei Frequenzkämme an dem Detektor 106. Die zu messende Distanz lässt sich aus der Phase der Schwebungssignale ermitteln. Der Eindeutigkeitsbereich ist dabei durch den Linienabstand desjenigen Kammes definiert, der über die Messstrecke propagiert (z.B. ein Teil des Frequenzkammsignals 201). Ist die Distanz aus der ersten Teilmessung bereits mit hinreichender Genauigkeit bekannt, verfeinert die zweite Teilmessung die Messung nach dem Prinzip einer Mehrwellenlängeninterferometrie mit synthetischen Wellenlängen, die den Abständen der mittels des Referenzkamms ausgewerteten Linien des durch den Messstrahlengang propagierten Frequenzkamms entsprechen.

Die für die synthetischen Wellenlängen ausgewerteten Linienabstände können Werte bis in den THz-Bereich annehmen; damit lassen sich Genauigkeiten von unter einem Mikrometer erzielen. Ist zusätzlich die Wellenlänge einer Linie des Kammes 201 bekannt, so lässt sich die Distanz aus den erfassten Messdaten auf einer dritten Längenskala bestimmen, deren Eindeutigkeitsbereich und Genauigkeit durch die optische Wellenlänge gegeben sind. So kann das Verfahren für besonders hohe Genauigkeitsanforderungen um eine weitere, sehr feinskalige Messung nach dem Prinzip der optischen Interferometrie ergänzt werden.

Im Einzelnen:

Die von den Frequenzkammquellen 101 und 102 emittierten Frequenzkammsignale 201 und 202 (oder kurz Frequenzkämme) können beschrieben werden durch:

$$E_1(t) = \mathrm{Re}\left( \sum_m A_{1m} \exp[i(m\omega_{r,1} + \omega_{0,1})t] \right) \qquad (1.1)$$

$$E_2(t) = \mathrm{Re}\left( \sum_n A_{2n} \exp[i(n\omega_{r,2} + \omega_{0,2})t] \right) \qquad (1.2)$$

In den obigen Formeln bezeichnen:

$E_1(t)$ das elektrische Feld des ersten Frequenzkammsignals;
$E_2(t)$ das elektrische Feld des zweiten Frequenzkammsignals;
$A_{1m}$ die Amplitude der $m$-ten Kammlinie des ersten Frequenzkammsignals;
$A_{2n}$ die Amplitude der $n$-ten Kammlinie des zweiten Frequenzkammsignals;
$\omega_{r,1}$ den Linienabstand des ersten Frequenzkammsignals;
$\omega_{r,2}$ den Linienabstand des zweiten Frequenzkammsignals;
$m,n$ ganze Zahlen.

Die Lage der einzelnen Kammlinien wird so gewählt, dass einander entsprechende Linien von ersten und zweiten Frequenzkamm (Frequenzkamm 1 bzw. Frequenzkamm 2) die Abstände

$$\Delta\omega_n = n\Delta\omega_r + \Delta\omega_0 \text{ mit } \Delta\omega_r = \omega_{r,2} - \omega_{r,1} \text{ und } \Delta\omega_0 = \omega_{0,2} - \omega_{0,1}$$

aufweisen, die sehr klein im Vergleich zu den Linienabständen $\omega_{r,1}$ und $\omega_{r,2}$ der einzelnen Frequenzkämme sind, wie in Figur 2 gezeigt.

Das Überlagerungssignal lässt sich schreiben als

$$I_{beat,\mathrm{I}}(t) = \mathrm{Re}\left( \sum_n \underline{I}_{n,\mathrm{I}} \exp[i\Delta\omega_n t] \right), \qquad (1.3)$$

$$\underline{I}_{n,\mathrm{I}} = RA_{1,n}A_{2n}^* \exp[-i\frac{\Delta\omega_n}{c}L]$$

mit nach gemeinsam durchlaufener Distanz $L$ und der Empfindlichkeit der Photodiode $R$. $\underline{I}_{n,I}$ bezeichnet die komplexe Amplitude $\underline{I}_n$ aus der Fourieranalyse der elektrischen Schwebung bei der ersten Teilmessung.

Im Folgenden wird der Einfachheit halber von einer ersten und einer zweiten (Teil)messung gesprochen. Diese Nomenklatur sagt jedoch nichts über die etwaige zeitliche Reihenfolge der beiden Teilmessungen aus. Bei zeitlich sequentieller Messung kann die zweite Teilmessung vor der ersten Teilmessung erfolgen. Ebenfalls können die beiden Teilmessungen gleichzeitig erfolgen.

Erste (Teil)Messung:

Bei der ersten Teilmessung werden Teile von beiden Signalen 201 und 202 im Strahlteilerelement 109 zunächst zur Interferenz gebracht und propagieren anschließend durch den Messstrahlengang 104. Dies führt zu Phasenänderungen $\varphi_{1m}$ und $\varphi_{2m}$ für die einzelnen Linien von Frequenzkamm 201 und 202. Das optische Signal wird an der Detektoreinheit 106 quadratisch detektiert. Das entstehende Basisband-Signal enthält Anteile mit Frequenzen $\Delta\omega_n$, die aus der Überlagerung einander entsprechender Linien der beiden Kämme entstehen. Eine optionale, in den Detektoreinheiten 105 und 106 enthaltene analoge Signalverarbeitungseinheit kann der Aufarbeitung des Überlagerungssignals dienen. Das Überlagerungssignal kann mit der oben genannten Formel 1.3 beschrieben werden.

Die Phasen der erfassten elektrischen Schwebungssignale (aus der ersten Teilmessung und der Referenzmessung) lassen sich über eine Fourieranalyse ermitteln. Die messtechnisch erfassten Phasen liegen dabei immer im Bereich zwischen 0 und $2\pi$. Sie können um ganzzahlige Vielfache $\nu$ von $2\pi$ von den tatsächlichen Phasen abweichen.

Ein Vergleich der Phasen, die über die Messstrecke 104 (bzw. über den Messstrahlengang) und die Referenzstrecke 103 (bzw. über den Referenzstrahlengang) mit Längen $L_{meas}$ und $L_{ref}$ akkumuliert wurden, liefert:

$$\Delta\Phi_{n,\mathrm{I}} = \arg\left\{\underline{I}_{n,\mathrm{I},meas}\right\} \bmod 2\pi - \arg\left\{\underline{I}_{n,\mathrm{I},ref}\right\} \bmod 2\pi$$

$$= -\frac{\Delta\omega_n}{c}\left(L_{meas} - L_{ref}\right) + \nu 2\pi$$

$$= -\frac{\Delta L_{\mathrm{I}}}{c} n\Delta\omega_r - \Delta\omega_0 \frac{\Delta L_{\mathrm{I}}}{c} + \nu 2\pi \qquad (1.4)$$

Dabei werden für die Referenzmessung die Frequenzkammsignale (oder zumindest Teile der Frequenzkammsignale) im Referenzstrahlengang 103 zur Interferenz gebracht und das Überlagerungssignal/Interferenzsignal von der Detektoreinheit 105 erfasst. Das Überlagerungssignal kann mit der oben genannte Formel (1.3) beschrieben werden, wobei L = ▨ EMBED Equation. DSMT4 ▨▨▨ .

**Figur 4** zeigt den bei der ersten Messung ermittelten Phasenunterschied $\Delta\Phi_{\mathrm{I}}(n)$ als Funktion des Faktors $n\Delta\omega_r$. Nach Bestimmung von $\nu$ durch einen geeigneten Algorithmus ("unwrap"), lässt sich dann der Wegunterschied zwischen dem Messstrahlengang und dem Referenzstrahlengang $\Delta L_{\mathrm{I}} = L_{meas} - L_{ref}$ aus einer linearen Regression 1401 berechnen, wie in Figur 4 gezeigt. Da der Frequenzoffset $\Delta\omega_0$ bzw. der Unterschied der Linienabstände $\Delta\omega_r$ im Prinzip beliebig klein gewählt werden kann, kann der maximale Eindeutigkeitsbereich im Prinzip beliebig vergrößert werden.

Zweite (Teil)Messung:

Die zweite Teilmessung kann gleichzeitig mit oder (unmittelbar) nach oder vor der ersten Messung durchgeführt werden. Dabei propagiert Signal 201 zuerst einzeln durch den Messstrahlengang 104 mit der Länge $L_{meas}$ und wird anschließend mit einem Teil des Signals 202 (welches bis zur Überlagerung eine Strecke 110 mit der Länge $L_0$ durchläuft) aus der optischen Verzweigungseinheit 107 zur Interferenz gebracht und von der optischen Detektoreinheit 106 detektiert (Figuren 1 und 2). Das Überlagerungssignal lässt sich analog zur ersten Teilmessung schreiben als

$$I_{beat,\mathrm{II}}(t) = \mathrm{Re}\left(\sum_n \underline{I}_{n,\mathrm{II}} \exp[i\Delta\omega_n t]\right), \qquad (1.5)$$

Wobei

$$I_{n,\text{II}} = RA_{1,n}A_{2n}^{*}\exp\left[-\frac{i}{c}\Big(L_{meas}(\omega_{0,1}+n\omega_{r,1})-L_{0}(\omega_{0,2}+n\omega_{r,2})\Big)\right],$$

und wobei $R$ die Empfindlichkeit der Photodiode bezeichnet.

Die Phasen der elektrischen Schwebungssignale lassen sich wiederum über eine Fourieranalyse ermitteln. Die messtechnisch erfassten Phasen liegen dabei immer im Bereich zwischen 0 und $2\pi$. Sie können um ganzzahlige Vielfache $v$ von $2\pi$ von den tatsächlichen Phasen abweichen.

Ein Vergleich der Phasen, die über die Messstrecke 104 und die Referenzstrecke 103 mit Längen $L_{meas}$ und $L_{ref}$ akkumuliert wurden, liefert:

$$\Delta\Phi_{n,\text{II}} = \arg\left\{\underline{I}_{n,\text{II},meas}\right\}\bmod 2\pi - \arg\left\{\underline{I}'_{n,\text{II},ref}\right\}\bmod 2\pi$$
$$= -n\omega_{r,1}\frac{\Delta L_{\text{II}}}{c} - \omega_{0,1}\frac{\Delta L_{\text{II}}}{c} + v2\pi \qquad (1.6)$$

Dabei wird nur eine einzige Referenzmessung (pro Teilmessung) ausgeführt; hier werden beide Kämme überlagert; die Phasen dienen als Referenz für die Teilmessungen.

**Figur 5** zeigt den bei der zweiten Messung ermittelten Phasenunterschied $\Delta\Phi_{\text{II}}(n)$ als Funktion des Faktors $n\Delta\omega_{r,1}$. Nach Bestimmung von $v$ durch einen geeigneten Algorithmus ("unwrap"), lässt sich dann $\Delta L_{\text{II}}$ mit einer linearen Regression 1501 aus der Steigung berechnen, wie in Figur 5 gezeigt. Der maximale Eindeutigkeitsbereich ist dabei gegeben durch

$$L_{ua} = \frac{\pi c}{\omega_{r,1}} \qquad (1.7)$$

Aus dem Ordinatenabschnitt lässt sich prinzipiell die Länge des Messstrahlengangs mit einer Genauigkeit bestimmen, die der Genauigkeit einer interferometrischen Messung bei einer Wellenlänge $\lambda_{0,1} = \dfrac{2\pi c}{\omega_{0,1}}$ entspricht.

Etwaige Unterschiede in den optischen Weglängen von den bei den einzelnen Messungen jeweils genutzten Strahlengängen innerhalb der Messvorrichtung resultieren in konstanten Phasenverschiebungen der erfassten Signale. Durch eine Kalibrierungsmessung verschwinden diese Einflüsse. Der zu messende Längenunterschied ist dann $\Delta L_{\text{I}} = \Delta L_{\text{II}} = \Delta L$. Durch ausreichend genaue, gleichzeitige Berechnung von $\Delta L$ mit den angesprochenen Teilmessungen können Uneindeutigkeiten der absoluten Länge vermieden werden. Somit kann eine verbesserte multiskalige Distanzmessung erreicht werden.

Die beiden Teilmessungen können gleichzeitig oder zeitlich nacheinander erfolgen. Es ist lediglich erforderlich, dass die jeweils relevanten Phasenlagen der Basisband-Signale getrennt voneinander erfasst werden. Dies kann beispielsweise auf unterschiedliche Arten geschehen, wie nachfolgend beispielhaft beschrieben.

Um die beiden Teilmessungen getrennt auszuwerten, können zur Detektion zum Beispiel zwei getrennte bzw. einzelne Photodioden genutzt werden. Alternativ kann ein balancierter bzw. differentieller Detektor verwendet werden.

**Figur 6** zeigt einen beispielhaften balancierten bzw. differentiellen Detektor. Der Detektor umfasst einen Koppler bzw. einen Mischer 501, zwei Photodioden 502 und 503, eine Subtraktionseinheit 504 und eine Additionseinheit 505 für die elektrischen Signale der Photodioden. Der Detektor kann ebenfalls andere Elemente, wie z.B. Signalverstärker, Signalwandler, Filter, etc., umfassen. Der Koppler 501 mischt bzw. kombiniert die beiden optischen Eingangssignale vor der Detektion, so dass das Summen- und das Differenzsignal der optischen Eingangssignale getrennt ausgewertet werden können.

Es gilt für das Summen- und Differenzsignal:

$$I_1(t) - I_2(t) = R\left(2\,\mathrm{Re}\left(iE_1^* E_2'\right) + 2\,\mathrm{Re}\left(iE_2^* E_2'\right)\right) \tag{1.8}$$

$$I_1(t) + I_2(t) = R\left(\left|E_1\right|^2 + \left|E_2\right|^2 + \left|E_2'\right|^2 + 2\,\mathrm{Re}\left(E_1 E_2^*\right)\right) \tag{1.9}$$

Dabei bezeichnet $E_1$ das elektrische Feld von Frequenzkamm 201, $E_2$ das Feld des Teils von Frequenzkamm 202, welcher von der optischen Verzweigungseinheit 107 in den Messstrahlengang 104 geleitet wird, $E_2'$ das Feld des Teil von Frequenzkamm 202, welcher von der optischen Verzweigungseinheit 107 direkt zur Detektoreinheit 106 geleitet wird, $I_1(t)$ das elektrische Signal an Photodiode 502, $I_2(t)$ das elektrischen Signal an Photodiode 503 und $R$ die Empfindlichkeit der Photodioden. Der Anteil $2\,\mathrm{Re}\left(iE_2^* E_2'\right)$ am Differenzsignal liefert nur einen Gleichanteil, während $2\,\mathrm{Re}\left(iE_1^* E_2'\right)$ das gewünschte Signal für die oben genannte zweite Teilmessung liefert. Ähnliches gilt für das Summensignal, $2\,\mathrm{Re}\left(E_1 E_2^*\right)$ entspricht dem gewünschten Signal für die oben genannte erste Teilmessung.

Das Summensignal der beiden Photodioden 502 und 503 am Ausgang der Additionseinheit 505 ermöglicht also die Auswertung der elektrischen Schwebungssignale von oben der erwähnten ersten Teilmessung, bei welcher Signal 201 und ein Teil von Signal 202 gemeinsam durch den Messstrahlengang propagieren. Entsprechend ermöglicht das Differenzsignal der beiden Photodioden 502 und 503 am Ausgang der Subtraktionseinheit die Auswertung der zweiten Teilmessung, bei welcher nur Signal 201 durch den Messstrahlengang propagiert und erst am Detektor mit einem anderen Teil von Signal 202 überlagert wird. Insbesondere fallen durch die differentielle Detektion diejenigen Anteile der elektrischen Schwebung aus dem aufgenommenen Signal heraus, die aus der ersten Teilmessung stammen (also Überlagerung von E1 und E2 und gemeinsame Propagation beider Kämme durch den Messstrahlengang).

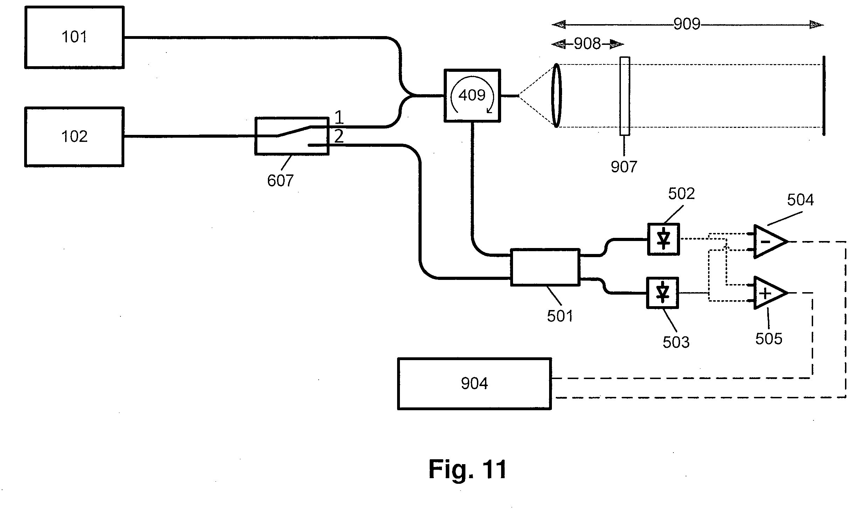

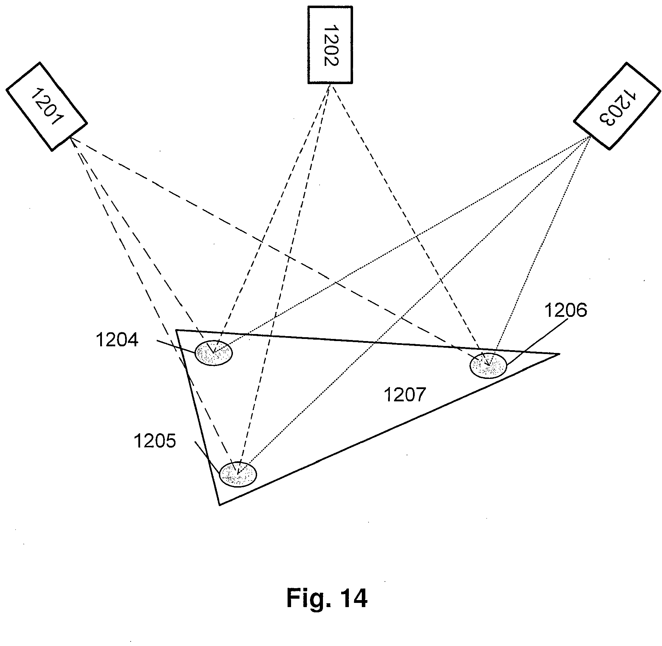

Mit dem erfindungsgemäßen Messverfahren ist die gleichzeitige Messung der Distanzen zu verschieden weit entfernten Teilreflektoren im Strahlengang möglich. Dies ermöglicht zum einen, den Referenzstrahlengang durch einen halbdurchlässigen Spiegel vollständig in den Messstrahlengang zu legen, wie nachfolgend in Zusammenhang mit Figur 11 näher beschrieben wird. Zum anderen ermöglicht dies die Anwendung der Messvorrichtung zur Bestimmung von Position und Orientierung eines mit mehreren Retroreflektoren versehenen Messobjekts im Raum, wie nachfolgend in Zusammenhang mit Figuren 14 bis 18 näher beschrieben wird.

Eine gleichzeitige Messung der Distanzen zur verschieden weit entfernten Teilreflektoren im Strahlengang kann beispielsweise wie folgt erfolgen:
Bei einer ersten Teilmessung propagiert der Frequenzkamm 201 und ein Teil von Frequenzkamm 202 durch den Messstrahlengang 104. Im Messstrahlengang 104 befinden sich mehrere (z.B. zwei) Teilreflektoren, welche jeweils einen Teil der Signale reflektieren. Die Ermittlung der jeweiligen Distanzen zu den verschiedenen Reflektoren wird durch eine Fourieranalyse des Summensignals in der Datenverarbeitungseinheit 108 vorgenommen. Die komplexen Amplituden $\underline{I}_n$ aus der Fourieranalyse der elektrischen Schwebung an den $N$ diskreten Stellen $n\Delta\omega_r$ (siehe Figur 3) setzen sich zusammen aus den Beiträgen der verschiedenen Reflektoren mit den unterschiedlichen Abständen von der Frequenzkammquelle $L_1$ und $L_2$:

$$\underline{I}_n = I_{n,1}e^{-i\frac{L_1}{c}\Delta\omega_n} + I_{n,2}e^{-i\frac{L_2}{c}\Delta\omega_n} \tag{1.10}$$

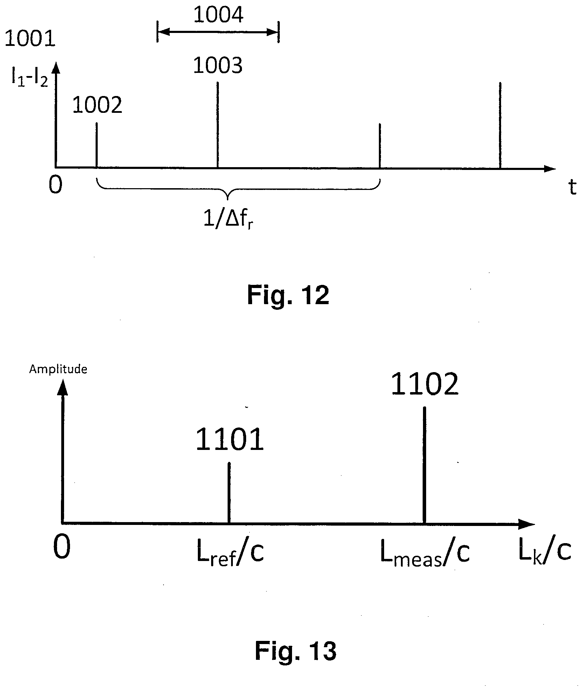

Eine Fouriertransformation dieser Amplituden bezüglich $\Delta\omega_n$ liefert die charakteristischen Spitzen 1101 und 1102 für die Reflektionen an den einzelnen Teilreflektoren (siehe z.B. Figur 13). Aus der Position dieser Spitzen auf der Frequenzachse lassen sich die Längen $L_1$ und $L_2$ bestimmen.

Für die zweite Teilmessung propagiert der Frequenzkamm 201 einzeln durch den Messstrahlengang mit den darin befindlichen Teilreflektoren und wird mit dem anderen Teil des Frequenzkamms 202 an der Detektionseinrichtung überlagert. Die auszuwertenden Schwebungssignale sind im Differenzsignal 1001 der Photodioden enthalten (siehe z.B. Figur 12). Eine Unterscheidung der Anteile des Signals, welche von den verschiedenen Reflektoren zurückgeworfen wurden, kann dabei durch die Verwendung eines Zeitfensters 1004 vor der weiteren Fourieranalyse in der Datenverarbeitungseinrichtung 108 getroffen werden. Durch das Ausschneiden der einzelnen Anteile verschiedener Reflektoren ist eine getrennte Analyse der Informationen von den einzelnen Reflektionsereignissen möglich. Alternativ kann auch eine Fourieranalyse analog zur Auswertung der ersten Teilmessung erfolgen.

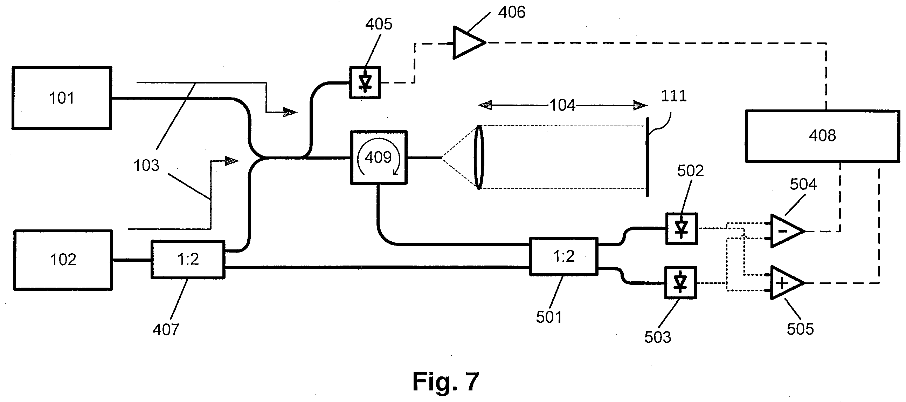

**Figur 7** zeigt eine beispielhafte Vorrichtung zur Distanzmessung, bei welcher die beiden Teilmessungen gleichzeitig stattfinden können. Die Vorrichtung umfasst zwei Frequenzkammquellen 101 und 102, einen Leistungsteiler 407, einen Zirkulator 409 und eine Detektionseinrichtung. Die Detektionseinrichtung umfasst zwei Detektoreinheiten. Die erste Detektoreinheit umfasst eine Photodiode 405 und (optional) einen elektrischen Verstärker 406. Die zweite Detektoreinheit ist ein balancierter Detektor, wie in Figur 6 gezeigt. Ferner umfasst die Vorrichtung eine Verzweigungseinheit, welche ausgelegt ist, das von der zweiten Frequenzkammquelle 102 emittierte Frequenzkammsignal in zumindest zwei Teile zu spalten. Die in Figur 7 gezeigte Verzweigungseinheit besteht aus einem optischen Leistungsteiler 407. Die Verzweigungseinheit kann jedoch auch andere optische Komponente umfassen, wie z.B. weitere Leistungsteiler, Filter, Linsen, Spiegel, etc..

Bei der in Figur 7 gezeigten Vorrichtung zur Distanzmessung werden beide Signale des balancierten Detektors verwendet. Die Trennung der gleichzeitig stattfindenden Teilmessungen bei Nutzung eines Leistungsteilers ist durch Auswertung des Summensignals 505 und des Differenzsignals 504 der Photodioden 502 und 503 möglich, wie in Figur 7 gezeigt. Insbesondere kann die Distanzmessung wie folgt erfolgen:

Das Signal 202 von Frequenzkammquelle 102 wird am Leistungsteiler 407 in zwei Teile geteilt. Das Teilungsverhältnis kann 50:50 (3 dB-Leistungsteiler), oder ein entsprechend gewähltes anderes Teilungsverhältnis sein. Ein erster Teil des Signals von Frequenzkammquelle 102 wird am Zirkulator 409 mit einem Teil des Signals 201 von Frequenzkammquelle 101 zur Interferenz gebracht. Beide Signale propagieren anschließend durch den Messstrahlengang 104. Der andere Teil des Signals 202 von Frequenzkammquelle 102 wird am Koppler 501 mit den durch den Messstrahlengang 104 propagierten Signalen zur Interferenz gebracht. Die Photodioden 502 und 503 detektieren das optische Signal. Die elektrischen Signale der Photodioden werden als Summen- bzw. Differenzsignal ausgewertet.

Die Differenz der elektrischen Signale von den Photodioden 502 und 503 (d.h. das Signal am Ausgang der Subtraktionseinheit 504) beinhaltet die Schwebung des Signals 201 von Frequenzkammquelle 101 nach der Propagation durch den Messstrahlengang mit dem Teilsignal von Frequenzkammquelle 102, welches auf direktem Weg zur Detektoreinheit geführt wurde. Die relative Phasenlage der Schwebung zur Referenzmessung ist durch Formel (1.6) beschrieben. Aus einer linearen Regression mit den Ergebnissen dieser Teilmessung lässt sich mit der Datenverarbeitungseinheit 408 die zu messende Distanz prinzipiell mit interferometrischer Genauigkeit bestimmen. Der Eindeutigkeitsbereich ist gegeben durch Formel (1.7). Bei Verwendung von Frequenzkammquellen mit einer Wiederholrate von ungefähr 10 GHz ergibt sich für diese Teilmessung ein Eindeutigkeitsbereich von ungefähr 1,5 cm.

Dieser Eindeutigkeitsbereich wird jedoch durch die andere Teilmessung deutlich vergrößert. So beinhaltet die Summe der elektrischen Signale von den Photodioden 502 und 503 (d.h. das Signal am Ausgang der Additionseinheit 505) die Schwebung des Signals 201 von Frequenzkammquelle 101 nach der Propagation durch den Messstrahlengang 104 mit dem Teilsignal von Frequenzkammquelle 102, welches ebenfalls durch den Messstrahlengang propagiert ist. Die relative Phasenlage der Schwebung zur Referenzmessung ist durch Formel (1.4) beschrieben. Aus einer linearen Regression mit den Ergebnissen dieser Teilmessung lässt sich die zu messende Distanz bestimmen. Die dabei zu erreichende Genauigkeit soll dabei größer sein als der Eindeutigkeitsbereich der anderen Teilmessung. Der maximale Eindeutigkeitsbereich ist deutlich vergrößert, da die Messung einer Mehrwellenlängeninterferometrie mit einer großen Anzahl an Wellenlängen (gleich der Zahl der Kammlinienpaare) entspricht.

Das Signal der Referenzmessung kann mit der Photodiode 405 direkt erfasst und optional mit dem elektrischen Verstärker 406 verstärkt werden.

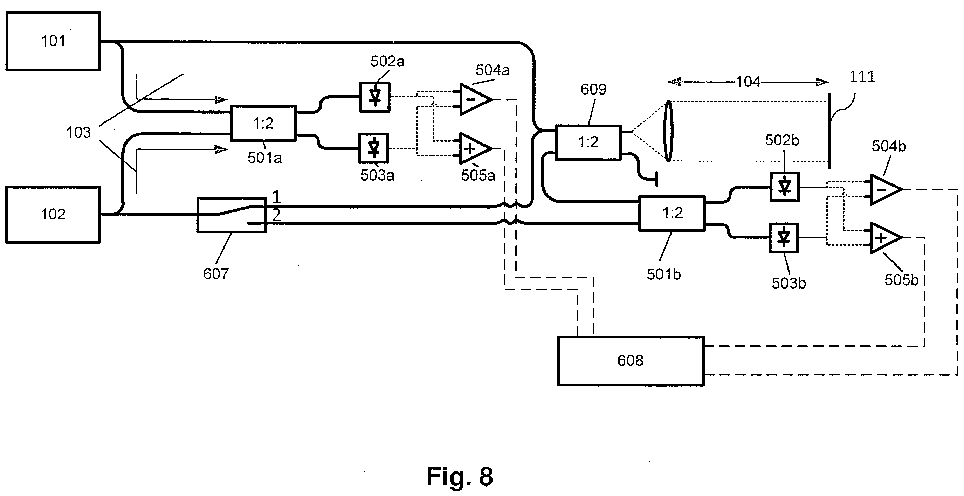

**Figur 8** zeigt eine Vorrichtung zur Distanzmessung gemäß einem anderen bevorzugten Beispiel. In dieser Ausführungsform ist die Vorrichtung derart ausgelegt, dass die beiden Teilmessungen zeitlich sequentiell ausgeführt werden können. Die Vorrichtung zur Distanzmessung umfasst zwei Frequenzkammquellen 101 und 102, einen Leistungsteiler 501a, eine erste Detektoreinheit, eine zweite Detektoreinheit, einen optischen Schalter bzw. Umschalter 607 sowie einen Koppler 609. In diesem Fall besteht die optische Verzweigungseinheit 107 aus dem optischen Schalter 607. Die Verzweigungseinheit kann jedoch zusätzliche optische Komponenten umfassen.

Bei der in Figur 8 gezeigten Ausführungsform besteht die erste Detektoreinheit aus einem balancierten Detektor mit einem optischen Koppler 501a, zwei Photodioden 502a und 503a, einer Subtraktionseinheit 504a und einer Additionseinheit 505a für die elektrischen Signale der Photodioden 502a und 503a. Die erste Detektoreinheit kann ferner andere Komponenten, wie z.B. elektrische Verstärker umfassen. Die erste Detektoreinheit kann ebenfalls nur eine einzelne Photodiode aufweisen. Die erste Detektoreinheit ist derart ausgelegt, um die Überlagerungssignale bei der Referenzmessung zu erfassen. Bei einem balancierten Detektor ermöglicht das Summensignal der beiden Photodioden 502a und 503a die Auswertung der elektrischen Schwebungssignale von der Referenzmessung, bei welcher ein Teil des Signals 201 und ein Teil des Signals 202 gemeinsam durch den Referenzstrahlengang propagieren.

Die zweite Detektoreinheit besteht ebenfalls aus einem balancierten Detektor mit einem optischen Koppler 501a, zwei Photodioden 502a und 503a, einer Subtraktionseinheit 504a und einer Additionseinheit 505a für die elektrischen Signale der Photodioden 502a und 503a. Die zweite Detektoreinheit kann jedoch selbstverständlich andere Komponenten, wie z.B. elektrische Verstärker, Signalwandler, Filter, etc. umfassen.

Die Distanzmessung kann wie folgt erfolgen:

Das Signal von Frequenzkammquelle 102 wird am optischen Umschalter 607 zeitlich sequentiell erst für eine erste Teilmessung (Position 1 des Schalters 607) durch den Messstrahlengang 104 geführt, danach für eine zweite Teilmessung (Position 2 des Schalters 607) auf direktem Weg zur Detektion an den Photodioden 502b und 503b. Die zeitliche Reihenfolge der beiden Teilmessungen kann jedoch vertauscht werden.

Bei der ersten Teilmessung wird das Signal von Frequenzkammquelle 102 am Koppler 609 mit dem Signal von Frequenzkammquelle 101 zur Interferenz gebracht. Beide Signale propagieren anschließend durch den Messstrahlengang 104. Die durch den Messstrahlengang 104 propagierten Signale werden anschließend detektiert. Da bei dieser Teilmessung nur der Additionspfad ein relevantes Signal ausgibt, kann die zweite Detektoreinheit nur eine einzelne Photodiode aufweisen. Die Summe der elektrischen Signale von den Photodioden 502b und 503b beinhaltet die Schwebung des Signals von Frequenzkammquelle 101 nach der Propagation durch den Messstrahlengang mit dem Teilsignal von Frequenzkammquelle 102, welches ebenfalls durch den Messstrahlengang propagiert ist. Die relative Phasenlage der Schwebung zur Referenzmessung ist durch Formel (1.4) beschrieben. Aus einer linearen Regression mit den Ergebnissen dieser Teilmessung lässt sich mit der Datenverarbeitungseinheit 608 die zu messende Distanz bestimmen. Der maximale Eindeutigkeitsbereich ist dabei deutlich vergrößert, da die Messung einer Mehrwellenlängeninterferometrie mit einer großen Anzahl an Wellenlängen (gleich der Zahl der Kammlinienpaare) entspricht.

Bei der zweiten Teilmessung wird das Signal von Frequenzkammquelle 102 auf direktem Weg zur zweiten Detektoreinheit geführt und dort am Koppler 501b mit dem Signal von Frequenzkammquelle 101 nach der Propagation durch den Messstrahlengang zur Interferenz gebracht. Die Differenz der elektrischen Signale von den Photodioden 502b und 503b beinhaltet die Schwebung des Signals von Frequenzkammquelle 101 nach der Propagation durch den Messstrahlengang mit dem Teilsignal von Frequenzkammquelle 102, welches auf direktem Weg zur Detektoreinheit geführt wurde. Die relative Phasenlage der Schwebung zur Referenzmessung ist durch Formel (1.6) beschrieben. Aus einer linearen Regression mit den Ergebnissen dieser Teilmessung lässt sich die zu messende Distanz prinzipiell mit interferometrischer Genauigkeit bestimmen. Der deutlich höhere Eindeutigkeitsbereich der Gesamtmessung im Vergleich zu einer einzelnen interferometrischen Messung wird durch die erste Teilmessung festgelegt.

Bei dieser Ausführungsform, in welcher eine zeitlich sequentielle Aufnahme der beiden Teilmessungen stattfindet, ergibt sich von vorneherein kein Problem bei der Trennung der beiden Teilmessungen.

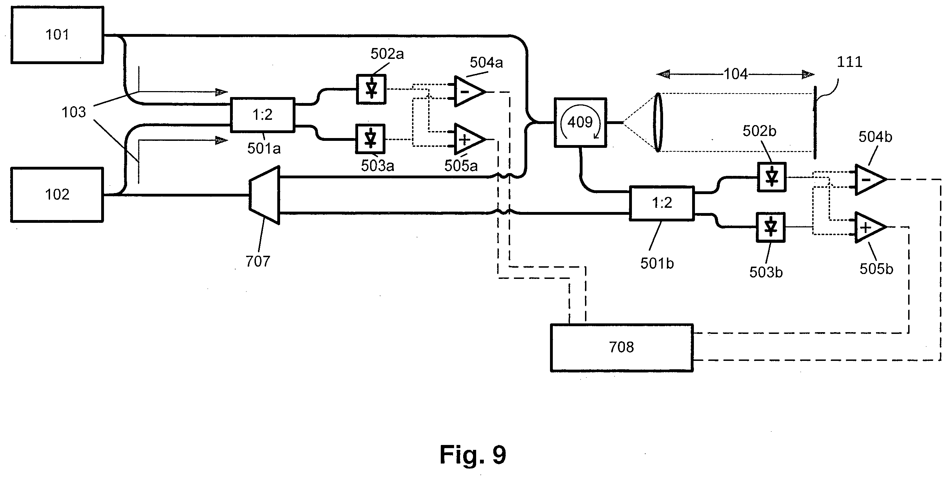

**Figur 9** zeigt eine weitere beispielhafte Vorrichtung zur Distanzmessung, bei welcher die beiden Teilsignale von einer der beiden Frequenzkammquellen spektral voneinander getrennt werden. Bei dieser Ausführungsform umfasst die Verzweigungseinheit 107 zumindest einen optischen Filter 707, welcher die spektrale Trennung der Teilsignale bewirkt. Die restlichen Komponenten der in Figur 9 gezeigten Vorrichtung zur Distanzmessung entsprechen den Komponenten der in Figur 8 gezeigten Vorrichtung zur Distanzmessung, wobei anstelle des Kopplers 609 ein Zirkulator 409 verwendet wird. Die Messung kann nach folgendem Verfahren erfolgen:

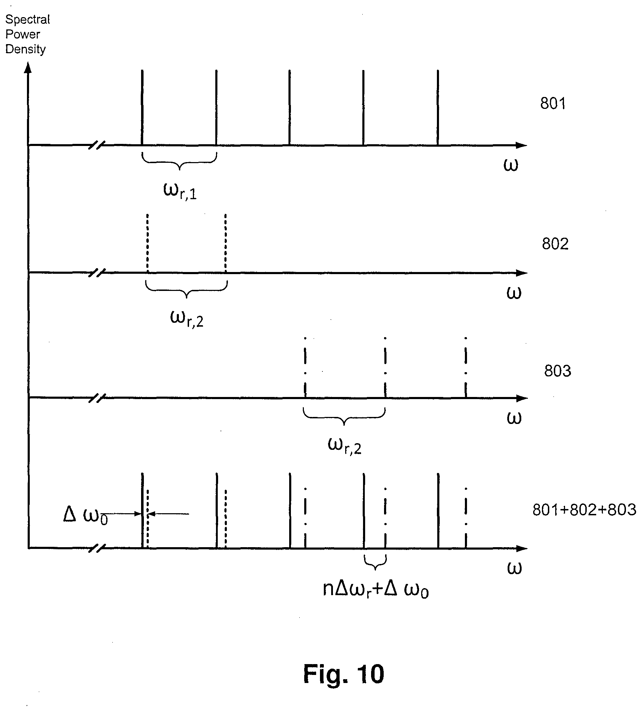

Das Signal von Frequenzkammquelle 102 wird am optischen Filter 707 spektral in einen ersten Anteil 802 und einen zweiten Anteil 803 geteilt. **Figur 10** zeigt die Lesitungsdichtespektren (d.h. die Leistungsdichte als Funktion der Frequenz $\omega$) des von Frequenzkammquelle 101 abgegebenen Signals 801, des ersten Anteils 802, des zweiten Anteils 803 und des Überlagerungssignals aller drei Signale 801+802+803.

Der erste Anteil 802 des Spektrums propagiert für eine erste Teilmessung zusammen mit dem Signal von Frequenzkammquelle 101 durch den Messstrahlengang. Gleichzeitig wird der zweite Teil des Spektrums 803 für eine zweite Teilmessung auf direktem Weg zum Koppler 501b geführt und dort mit den Signalen aus dem Messstrahlengang überlagert. Die Zuordnung der spektralen Anteile zu den verschiedenen Pfaden kann auch in veränderter Form vorgenommen werden.

Die durch die Überlagerung der Signale entstehenden Schwebungen werden an den Photodioden 502b und 503b detektiert. Bei der ersten Teilmessung liefert der durch den Messstrahlengang 104 propagierte Anteil des Spektrums 802 keinen Beitrag zum Differenzsignal der Photodioden 502b und 503b. Die Phase der Schwebung kann aus dem Summensignal gewonnen werden. Die Ermittlung der gemessenen Distanz erfolgt nach Formel (1.4) aus der Phasenbeziehung zum Referenzsignal in der Datenverarbeitungseinheit 708. Bei der zweiten, gleichzeitig stattfindenden Teilmessung liefert der direkt zur Detektoreinheit geleitete Anteil des Spektrums 803 keinen Beitrag zur Schwebung im Summensignal der Photodioden. Die Phase der Schwebung kann aus dem Differenzsignal gewonnen werden. Die Ermittlung der gemessenen Distanz erfolgt nach Formel (1.6) aus der Phasenbeziehung zum Referenzsignal in der Datenverarbeitungseinheit 708.

Durch die spektrale Trennung der beiden Teilsignale wird ermöglicht, dass die beiden Teilmessungen gleichzeitig stattfinden können. Beim erfassten elektrischen Schwebungssignal können so die einzelnen Schwebungslinien der jeweiligen Teilmessung zugeordnet werden. Dadurch kann für die Detektion der Signale ein einfaches Verfahren gewählt werden, z.B. eine direkte Detektion mit einer Photodiode. Obwohl bei dieser Ausführungsform keine Detektion mit zwei Photodioden nötig ist, ist eine solche Detektion ebenfalls möglich.

**Figur 11** zeigt eine Vorrichtung zur Distanzmessung gemäß einem fünften Beispiel der Erfindung. Bei dieser Ausführungsform ist der Referenzstrahlengang 908 vollständig im Messstrahlengang 909 enthalten. Dies kann durch die Verwendung bzw. Anordnung eines halbdurchlässigen Spiegels 907 im Messstrahlengang bewerkstelligt werden.

Die Unterscheidung zwischen der Referenzmessung und der tatsächlichen Messung kann durch den Laufzeitunterschied der Signale getroffen werden. Durch entsprechende Wahl von Zeitfenstern in der Datenverarbeitungseinheit 904 oder durch eine diskrete Fouriertransformation der komplexen Amplituden des Schwebungskammes können die Informationen aus Referenzsignal und Messsignal getrennt gewonnen werden.

Die Vorrichtung zur Distanzmessung umfasst zwei Frequenzkammquellen 101 und 102, eine Detektoreinheit, einen Zirkulator 409 und einen optischen Schalter bzw. Umschalter 607, und einen durchlässigen Spiegel. Die Detektoreinheit kann ein balancierter Detektor sein (vgl. Figur 6), welcher einen optischen Koppler 501, zwei Photodioden 502 und 503, eine Subtraktionseinheit 504 und eine Additionseinheit 505 für die elektrischen Signale der Photodioden 502 und 503 umfasst.

Die Distanzmessung kann wie folgt erfolgen:

An dem optischen Umschalter 607 wird das Signal von Frequenzkammquelle 102 für zwei zeitlich sequentiell durchgeführte Teilmessungen zur Verfügung gestellt. Das Ersetzen des Umschalters 607 durch einen Leistungsteiler oder einen optischen Filter ist ebenfalls möglich. Dadurch können die beiden Teilmessungen gleichzeitig durchgeführt werden.

Bei der ersten Teilmessung propagiert das Signal von Frequenzkammquelle 101 durch den Referenzstrahlengang 908 und Messstrahlengang 909. Ein Anteil dieses Signals wird dabei an dem teildurchlässigen Spiegel 907 reflektiert. Dieser Anteil liefert das Referenzsignal. Der teildurchlässige Spiegel 907 kann zum Beispiel eine Reflektivität von 0,1 aufweisen, aber auch andere Werte sind möglich. Der andere Anteil des Signals propagiert durch den gesamten Messstrahlengang und liefert das Messsignal.

Zur Detektion werden die Signale aus dem Messstrahlengang mit dem Teil des Signals von Frequenzkammquelle 102 im Koppler 501 zur Interferenz gebracht, welcher direkt zur Detektoreinheit geleitet wurde. Die auszuwertenden Schwebungssignale sind im Differenzsignal 1001 der Photodioden 503 und 502 enthalten, wie in **Figur 12** gezeigt. Eine Unterscheidung der Anteile des Signals 1002 aus dem Referenzstrahlengang 908 und des Signals 1003 aus dem Messstrahlengang 909 kann dabei durch die Verwendung eines Zeitfensters 1004 vor der weiteren Analyse in der Datenverarbeitungseinheit 904 getroffen werden. Dadurch ist eine getrennte Analyse der Informationen aus Referenzsignal und Messsignal möglich. Die Ermittlung der gemessenen Distanz erfolgt nach Formel (1.6) aus der Phasenbeziehung zwischen Referenz- und Messsignal.

Bei einer zweiten, zeitlich sequentiell oder gleichzeitig durchgeführten Teilmessung wird das Signal aus Frequenzkammquelle 102 am Zirkulator 409 mit dem Signal aus Frequenzkammquelle 101 zur Interferenz gebracht und propagiert anschließend durch Referenz- und Messstrahlengang 908 und 909. Ein Anteil der Signale wird dabei an dem teildurchlässigen Spiegel 907 reflektiert. Dieser Anteil liefert das Referenzsignal. Der andere Anteil der Signale propagiert durch den gesamten Messstrahlengang 908 und liefert das Messsignal. Die Detektion erfolgt an den Photodioden 503 und 502. Das auszuwertende Schwebungssignal ist im Summensignal der Photodioden enthalten. Eine Unterscheidung der Anteile des Signals aus Referenz- und Messstrahlengang kann nach einer Fourieranalyse in der Datenverarbeitungseinheit getroffen werden.

Die komplexen Amplituden $\underline{I}_n$ aus der Fourieranalyse der elektrischen Schwebung an den N diskreten Stellen $n\Delta\omega_r$ (siehe Figur 3) setzen sich zusammen aus den Beiträgen der verschiedenen Reflektoren mit den unterschiedlichen Abständen von der Frequenzkammquelle $L_{ref}$ und $L_{meas}$ :

$$\underline{I}_n = I_{n,ref}\, e^{-i\frac{L_{ref}}{c}\Delta\omega_n} + I_{n,meas}\, e^{-i\frac{L_{meas}}{c}\Delta\omega_n} \tag{1.11}$$

Eine Fouriertransformation dieser Amplituden bezüglich $\Delta\omega_n$ liefert die charakteristischen Spitzen 1101 und 1102 für die Reflektionen an den einzelnen Teilreflektoren, wie in **Figur 13** gezeigt. Aus der Position dieser Spitzen auf der Frequenzachse lässt sich die gemessene Distanz bestimmen.

**Weitere Beispiele**

Eine weitere beispielhafte Anordnung zur multiskaligen optischen Distanzmessung (siehe Figur 1) umfasst zwei optische Frequenzkammquellen 101 und 102, die zwei Signale 201 und 202 mit verschiedenen Linienabständen

$\omega_{r,1}$ und $\omega_{r,2}$ abgeben; mindestens eine optische Detektoreinheit 105 oder 106, welche geeignet ist, Überlagerungssignale 301 (siehe Figur 3) der Frequenzkämme im Basisband zu erfassen; einen Referenzstrahlengang 103, in dem die Signale 201 und 202 (siehe Figur 2) zur Interferenz gebracht werden und das Überlagerungssignal von der Detektoreinheit 105 erfasst wird; einen Messstrahlengang 104; eine optische Verzweigungseinheit 107; eine Datenverarbeitungseinheit 108 und ein optisches Strahlteilerelement 109. Das von der Frequenzkammquelle 101 abgegebene Signal 201 wird durch den Messstrahlengang propagiert. Die optische Verzweigungseinheit 107 führt das von der Frequenzkammquelle 102 abgegebene Signal 202 zumindest teilweise dem Messstrahlengang und zumindest teilweise der Detektoreinheit 106 zu. Derjenige der Detektoreinheit 106 zugeführte Anteil des Signals 202 wird mit den durch den Messstrahlengang propagierten Signalen überlagert. Die Datenverarbeitungseinheit 108 führt eine spektrale Analyse des von der Detektoreinheit 106 abgegebenen elektrischen Signals durch und extrahiert daraus den Wegunterschied zwischen Referenz- und Messstrahlengang.

Ein beispielhaftes Verfahren zur multiskaligen Distanzmessung umfasst die folgenden Schritte, welche zeitlich sequentiell oder gleichzeitig durchgeführt werden können: Überlagerung der Signale 201 und 202 im Referenzstrahlengang 103 und Erfassung des Interferenzsignals; Überlagerung des Signals 201 und mit einem Teil des Signals 202 und anschließender Einkopplung in den Messstrahlengang 104; Überlagerung des durch den Messstrahlengang 104 propagierten Signals mit einem weiteren Teil des Signals 202 und anschließender Detektion des Überlagerungssignals; spektrale Analyse der erfassten Überlagerungssignale und Extraktion des Wegunterschiedes zwischen Referenz- und Messstrahlengang aus den relativen Phasenlagen.

Die optische Verzweigungseinheit 107 kann einen Leistungsteiler 407 umfassen (siehe Figur 7). Die Detektoreinheit 106 kann mehrere getrennte Detektoren oder einen differentiellen Detektor bei dem sich Summen- und Differenzsignal getrennt auslesen lassen, umfassen (siehe Figur 6). Die Detektoreinheiten 105 und 106 können analog-elektrische oder diskrete Signalverarbeitungseinheiten umfassen, die das Signal vor der Abtastung und AD-Wandlung aufbereiten.

Die optische Verzweigungseinheit kann einen optischen Schalter 607 (siehe Figur 8) umfassen. Die Detektoreinheit 106 kann einen differentiellen Detektor umfassen, dessen Ausgangssignale für die verschiedenen Stellungen des Schalters 607 getrennt ausgelesen werden. Die optische Verzweigungseinheit kann einen optischen Filter 707 umfassen (siehe Figur 9).

Die Messdaten für die erste und die zweite Messung können unmittelbar nacheinander erhoben werden, indem mit Hilfe eines optischen Schalters 607 die Signale 201 und 202 an den entsprechenden Stellen zur Interferenz gebracht werden.

Die Messdaten für die erste und die zweite Messung können zeitgleich erhoben werden, wobei Signal 201 durch den Messarm/Messstrahlengang propagiert, während Signal 202 durch eine optische Filtereinheit 707 spektral in einen ersten Anteil 802 und einen zweiten Anteil 803 aufgeteilt wird (vgl. Figur 9). Für die erste Messung der erste Anteil 802 zunächst mit Signal 801 überlagert wird, dann durch den Messstrahlengang 104 propagiert und anschließend von der zweiten Detektoreinheit erfasst wird, während für die zweite Messung Signal 801 erst nach Durchlaufen des Messarmes/Messstrahlengangs mit dem zweiten Anteil 803 zur Interferenz gebracht und von der zweiten Detektoreinheit erfasst wird.

Der Referenzstrahlengang 908 kann vollständig im Messstrahlengang 909 enthalten sein (siehe teildurchlässiger Spiegel 907 im Referenzstrahlengang, Figur 11). Die Unterscheidung zwischen Referenzmessung und wirklicher Messung kann durch den Laufzeitunterschied der Signale getroffen werden. Durch entsprechende Wahl von Zeitfenstern in der Datenverarbeitung 904 oder durch eine diskrete Fouriertransformation der komplexen Amplituden des Schwebungskammes können die Informationen aus Referenzsignal und Messsignal getrennt gewonnen werden.

Die beschriebenen Distanzmesssysteme und -verfahren können nach dem Prinzip der Trilateration zur Messung räumlicher Koordinaten verwendet werden.

Die erfindungsgemäße Vorrichtung und das erfindungsgemäße Verfahren zur multiskaligen Distanzmessung können nach dem Prinzip der Trilateration zur Messung räumlicher Koordinaten bzw. zur Messung der Position und/oder der Orientierung von Messobjekten verwendet werden. Dabei sind verschiedene Konfigurationen möglich, die sich im Messaufbau unterscheiden.

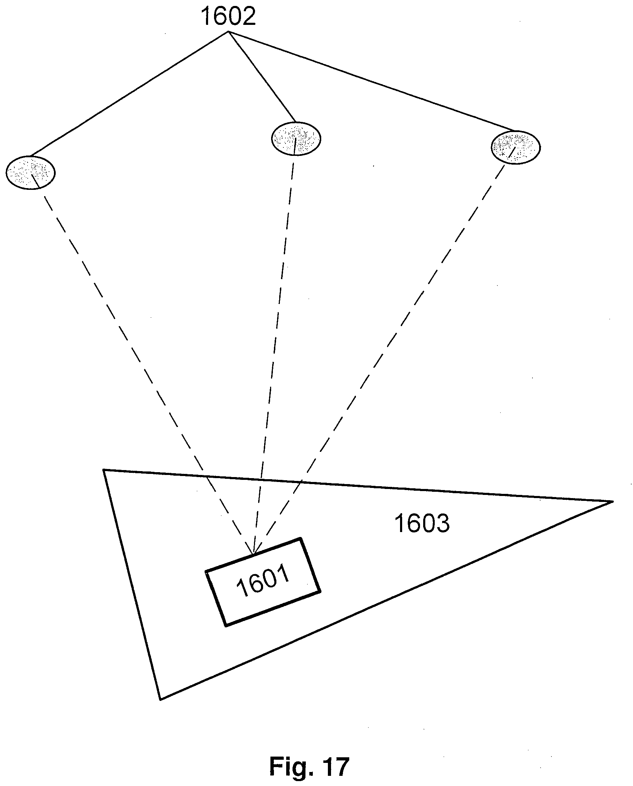

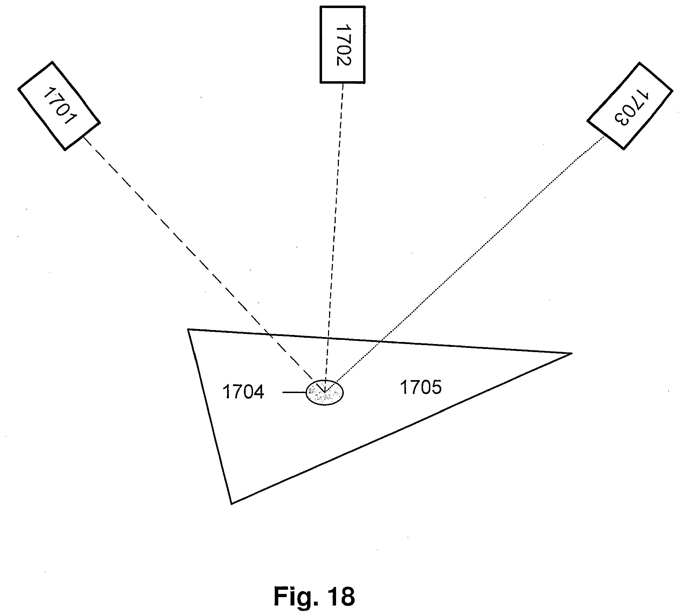

Eine erste mögliche Konfiguration zur Positionsbestimmung im Raum sieht die Platzierung eines beweglichen Senders (z.B. eine miniaturisierte Frequenzkammquelle) auf dem Messobjekt und eine Abstandsmessung relativ zu mindestens drei ortsfesten Reflektoren vor (siehe z.B. Figur 17). Dabei werden 3 Distanzen erfasst, aus denen sich die räumliche Lage des Senders bzgl. der Reflektoren bestimmen lässt. Eine andere Konfiguration zur Positionsbestimmung im Raum sieht die Messung der Abstände zwischen mehreren (z.B. drei) ortsfesten Sendern zu einem auf dem Messobjekt platzierten Reflektor vor (siehe z.B. Figur 18). Dabei werden ebenfalls 3 Distanzen erfasst, aus denen sich die räumliche Lage des Reflektors bzgl. der drei Sender bestimmen lässt.

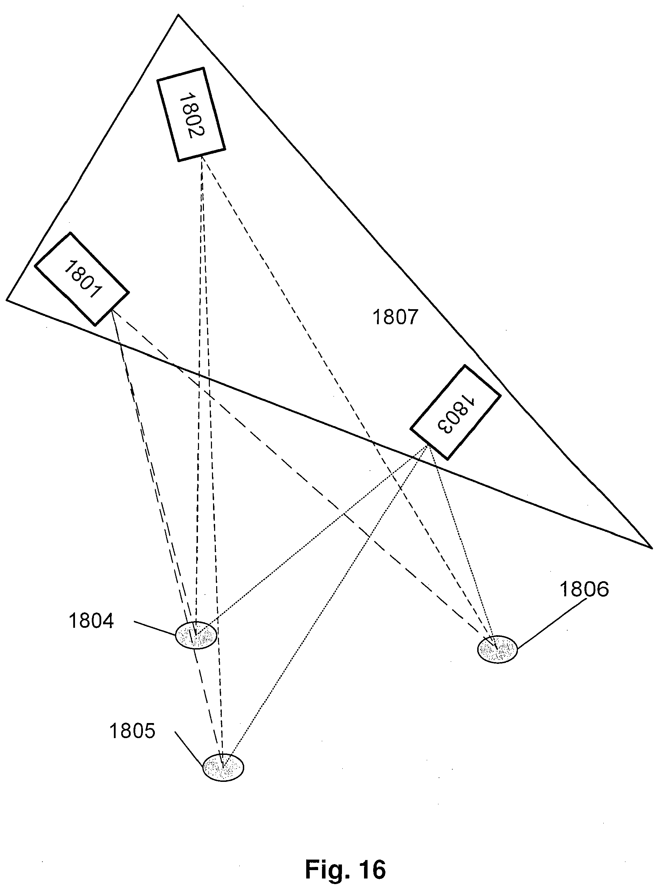

Zur Bestimmung von Position und Orientierung eines Objekts im Raum (6 Freiheitsgrade) ist die Messung von mindestens 6 Abständen zwischen mehreren, mindestens drei ortsfesten Sendern und mehreren, mindestens 3 Reflektoren mit bekannter Relativposition nötig, wie in Figur 14 gezeigt. Durch eine Überbestimmung (z.B. 9 Abstände zwischen drei Reflektoren und 3 Sendern) kann die Genauigkeit verbessert werden. Eine andere Konfiguration zur Bestimmung der Position und Orientierung des Messobjekts sieht die Abstandsmessung zwischen mehreren (mindestens drei) Sendern bekannter Relativposition und mehreren (mindestens drei) ortsfesten Reflektoren vor, wie in Figur 16 gezeigt. Durch eine Überbestimmung (z.B. 9 Abstände zwischen drei Reflektoren und 3 Sendern) kann auch in diesem Fall die Genauigkeit verbessert werden.

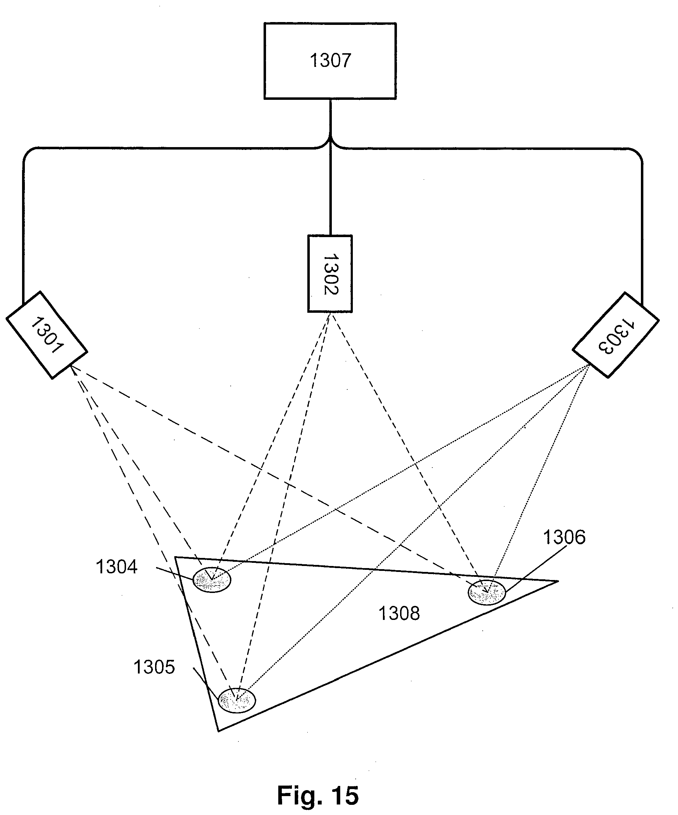

**Figur 14** zeigt den prinzipiellen Aufbau eines beispielhaften Systems zur Messung der Koordinaten bzw. der räumlichen Position und Orientierung eines Messobjekts basierend auf einer Messung der Distanzen zu mehreren Teilreflektoren. Das System umfasst drei Distanzmesseinheiten 1201, 1202 und 1203. Jede der Distanzmesseinheiten kann wie eine der Vorrichtungen zur Distanzmessung gemäß einem Beispiel der Erfindung aufgebaut werden. Die Distanzmesseinheiten 1301, 1302 und 1303 umfassen jeweils zwei Frequenzkammquellen bzw. Frequenzkammgeneratoren. Die Frequenzkammquellen können aus einer gemeinsamen Frequenzkammeinheit 1307 gespeist werden, wie in **Figur 15** gezeigt. Das Messobjekt 1207 (Figur 14) oder 1308 (Figur 15) ist mit drei Retroreflektoren 1204, 1205 und 1206 (Figur 14) oder Retroreflektoren 1304, 1305 und 1306 (Figur 15) versehen. Die in jeder der Distanzmesseinheiten umfassten Frequenzkammgeneratoren beleuchten die drei Retroreflektoren 1204, 1205 und 1206 (Figur 14) oder Retroreflektoren 1304, 1305 und 1306 (Figur 15). Mit dem oben beschriebenen Verfahren zur Distanzmessung, insbesondere zur Distanzmessung zu mehreren Reflektoren im Strahlengang, können die neun Abstände der Retroreflektoren von den jeweiligen Distanzmesseinheiten bestimmt werden. Über Trilateration sind damit die räumliche Position und Orientierung des Messobjekts 1207 oder 1308 (welche durch sechs unabhängige Parameter vollständig bestimmt sind), überbestimmt und können somit sicher gemessen werden. Bei geeigneter Auswertung der redundanten Information kann ganz oder teilweise auf eine Grobmessung der Abstände auf der größten Längenskala verzichtet werden.

**Figur 16** zeigt den prinzipiellen Aufbau eines anderen beispielhaften Systems zur Messung der räumlichen Position und Orientierung eines Messobjekts. Bei diesem System werden mindestens drei, vorzugsweise miniaturisierte, Distanzmesseinheiten 1801, 1802, 1803 bekannter Relativposition auf dem Messobjekt 1807 angebracht. Jede der Distanzmesseinheiten 1801-1803 kann wie eine der Vorrichtungen zur Distanzmessung gemäß einem Beispiel der Erfindung aufgebaut werden. Die Distanzen zu mindestens drei ortsfesten Reflektoren 1804, 1805 und 1806 werden mit einem der oben beschriebenen Verfahren zur Distanzmessung gemessen. Durch die aus den neun gemessenen Distanzen resultierende Überbestimmung der Position und Orientierung des Messobjekts 1807, kann durch Anwendung geeigneter Algorithmen die Messgenauigkeit verbessert werden.

**Figur 17** zeigt den prinzipiellen Aufbau eines dritten beispielhaften Systems zur Messung der räumlichen Position eines Messobjekts. Ist die Bestimmung der Position eines Messobjekts 1603 im Raum ausreichend, ist ein Messaufbau denkbar, bei welchem eine auf dem Messobjekt 1603 platzierte Distanzmesseinheit 1601 die Entfernung zu mindestens drei ortsfesten Retroreflektoren 1602 nach einem der oben beschriebenen Verfahren zur Distanzmessung bestimmt. Aus den drei gemessenen Entfernungen lässt sich durch Trilateration die Position der Distanzmesseinheit 1601 bestimmen. Werden mehr Reflektoren zur Messung herangezogen, kann dies zu einer Erhöhung der Messgenauigkeit genutzt werden. Die Distanzmesseinheit 1601 kann wie eine der Vorrichtungen zur Distanzmessung gemäß einem Beispiel der Erfindung aufgebaut werden.

**Figur 18** zeigt den prinzipiellen Aufbau eines vierten beispielhaften Systems zur Messung der räumlichen Position eines Messobjekts. Mit diesem System lässt sich die Position eines Messobjekts 1705 ebenfalls bestimmen. Das System umfasst drei Distanzmesseinheiten 1701, 1702 und 1703. Jede der Distanzmesseinheiten 1701-1703 kann wie eine der Vorrichtungen zur Distanzmessung gemäß einem Beispiel der Erfindung aufgebaut werden. Die drei Distanzmesseinheiten 1701, 1702 und 1703 beleuchten einen auf dem Messobjekt 1705 platzierten Retroreflektor 1704. Aus den drei gemessenen Entfernungen zum Retroreflektor nach einem der oben beschriebenen Verfahren zur Distanzmessung kann die Position des Retroreflektors 1704 ermittelt werden.

Mit den oben beschriebenen Messvorrichtungen kann ebenfalls eine optische Messung der Relativgeschwindigkeit zumindest eines bewegten Messobjekts bezüglich eines festen (d.h. nicht bewegten) Referenzobjekts durchgeführt werden. So kann das im Messstrahlengang 104 enthaltene Messobjekt 111 ein bewegtes Objekt, z.B. ein bewegter Messreflektor sein. Der Referenzstrahlengang 103 kann ein festes (d.h. nicht bewegtes) Referenzobjekt enthalten. Der am Messobjekt 111 reflektierte Teil des ersten Frequenzkammsignals 201 kann mit einem durch den Referenzstrahlengang 103 propagierten und am Referenzobjekt reflektierten Teil des zweiten Frequenzkammsignals 202 überlagert werden, wobei das Überlagerungssignal von der Detektionseinrichtung 106 erfasst wird. Anhand der Dopplerverschiebung von spektralen Komponenten des erfassten Überlagerungssignals lässt sich, wie oben beschrieben, die Relativgeschwindigkeit des bewegten Messobjekts bezüglich des festen Referenzobjekts ermitteln.

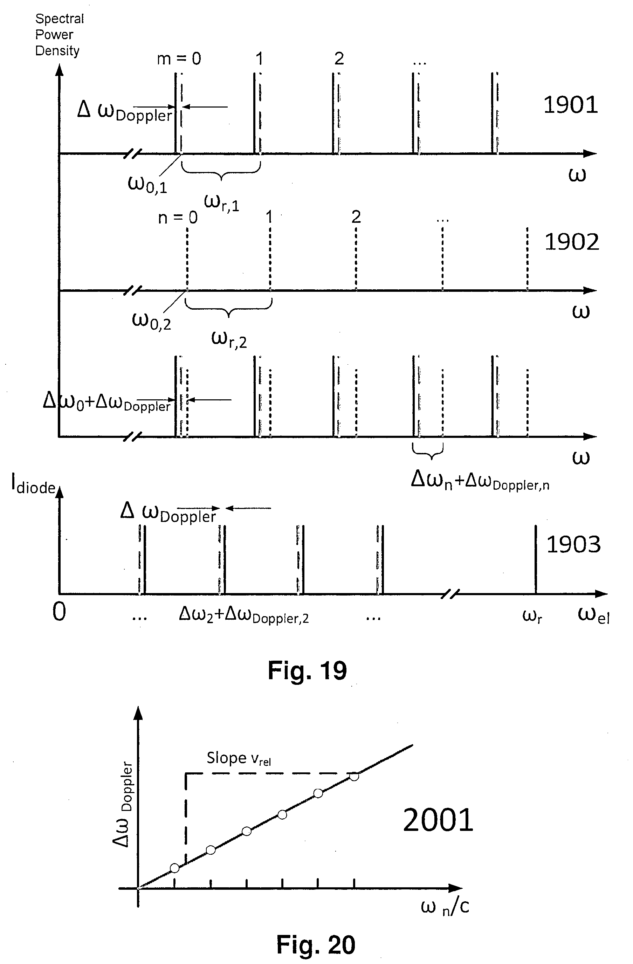

**Figur 19** zeigt die Leistungsdichtespektren (d.h. die spektrale Leistungsdichte als Funktion der Frequenz $\omega$) der jeweils von den Frequenzkammquellen 101 und 102 emittierten optischen Frequenzkammsignale 1901 und 1902 und das Spektrum $I_{diode}$ des detektierten elektrischen Überlagerungssignals 1903 als Funktion der Frequenz $\omega_{el}$. Dabei ist das durch den Messstrahlengang propagierte Signal 1901 von dem sich bewegenden Messreflektor 111 reflektiert worden und weist deshalb eine Dopplerverschiebung auf. Diese Dopplerverschiebung bildet sich bei Detektion mit dem unveränderten Signal 1902 (Referenzkammsignal) im elektrischen Signal 1903 ab und kann zum Ermitteln der Relativgeschwindigkeit herangezogen werden.

**Figur 20** zeigt den Dopplershift der einzelnen Linien als Funktion der jeweiligen Frequenz der Linien. Die Geschwindigkeit lässt sich mit einem linearen Fit 2001 aus der Steigung der Geraden ermitteln.

**Bezugszeichenliste**

| | |
|---|---|
| 101, 102 | Frequenzkammquellen |
| 103, 908 | Referenzstrahlengang |
| 104, 907 | Messstrahlengang |
| 105, 106 | Detektoreinheiten |
| 107 | Optische Verzweigungseinheit |
| 108, 408, 708, 904 | Datenverarbeitungseinheit |
| 109 | Strahlteiler oder Zirkulator |
| 110 | Strecke, welche von einem Teil eines der beiden Frequenzkammsignale bis zur Detektionseinheit zurücklegt wird; |
| 111 | Messobjekt |
| 201, 202 | Frequenzkämme/Frequenzkammsignale |
| 301, 801, 802 | elektrisches Signal (Schwebungssignal) |
| 406 | Verstärker |
| 407 | optischer Leistungsteiler |
| 409 | Zirkulator |
| 501a, b | Koppler bzw. Mischer |
| 405, 502a, b, 503a,b, | Photodioden |
| 504 | Subtraktionseinheit |
| 505 | Additionseinheit |
| 607 | optischer Schalter |
| 609 | Koppler / Mischer |
| 707 | optischer Filter |
| 907 | halbdurchlässiger Spiegel |
| 1001 | Differenzsignal der Photodioden 502 und 503 |
| 1002 | Signal aus dem Referenzstrahlengang |
| 1003 | Signal aus dem Messstrahlengang |
| 004 | Zeitfenster |
| 1101, 1102 | charakteristische Spitzen für die Reflektion an einzelnen Teilreflektoren |
| 1004 | Zeitfenster |
| 1601 | beweglicher Sender |
| 1207, 1308, 1603, 1705, 1807 | Messobjekt |
| 1201-1203, 1701-1703 | ortsfeste Sender/Frequenzkammeinheiten |
| 1301-1303, 1601, 1701-1703, 1801-1803 | Distanzmesseinheiten |
| 1307 | Frequenzkammeinheit |
| 1204-1206, 1304-1306, 1704, | Reflektor(en) |
| 1602, 1804-1806 | Reflektoren |
| 1801-1803 | Sender/Frequenzkammeinheiten |
| 1901 | Frequenzkammsignal mit Dopplershift |
| 1902 | Frequenzkammsignal (Referenzkamm) |
| 1903 | elektrisches Schwebungssignal mit Dopplershift |
| 2001 | linearer Fit zur Bestimmung der Relativgeschwindigkeit aus der Dopplerverschiebung |

**Patentansprüche**

1. Verfahren zur optischen Distanzmessung umfassend:

ein Erzeugen eines ersten und eines zweiten Frequenzkammsignals (201, 202), wobei das erste und das zweite Frequenzkammsignal (201, 202) unterschiedliche Linienabstände aufweisen;

eine Referenzmessung umfassend ein Überlagern zumindest eines Teils des ersten Frequenzkammsignals (201) und zumindest eines Teils des zweiten Frequenzkammsignals (202) in einem Referenzstrahlengang (103, 908) und ein Erfassen des durch den Referenzstrahlengang (103, 908) propagierten Überlagerungssignals; eine erste Messung umfassend ein Überlagern zumindest eines anderen Teils des ersten Frequenzkammsignals (201) mit zumindest einem anderen Teil des zweiten Frequenzkammsignals (202), wobei die überlagerten Signale zur Interferenz gebracht werden, ein Einkoppeln des Überlagerungssignals in einen Messstrahlengang (104, 907), wobei das Überlagerungssignal durch den Messstrahlengang (104, 907) propagiert, und ein Erfassen des von einem Messobjekt reflektierten, durch den Messstrahlengang (104, 907) propagierten Überlagerungssignals; und

ein Ermitteln des Wegunterschiedes zwischen dem Referenzstrahlengang (103, 908) und dem Messstrahlengang (104, 907) aus den erfassten Überlagerungssignalen.

2. Verfahren nach Anspruch 1, wobei das Ermitteln des Wegunterschieds eine spektrale Analyse der detektierten Überlagerungssignale und ein Ermitteln der relativen Phasenlagen ausgewählter spektraler Komponenten der detektierten Überlagerungssignale umfasst; wobei der Wegunterschied zwischen dem Referenzstrahlengang (103, 908) und dem Messstrahlengang (104, 907) aus den ermittelten relativen Phasenlagen ermittelt wird.

3. Verfahren nach Anspruch 1 oder 2, wobei das durch den Messstrahlengang (104, 907) propagierte Überlagerungssignal vor dem Erfassen mit einem dritten Teil des zweiten Frequenzkammsignals (202) überlagert wird.

4. Verfahren nach einem der vorangegangenen Ansprüche, ferner umfassend eine zweite Messung, wobei die zweite Messung ein Einkoppeln zumindest eines Teils des ersten Frequenzkammsignals (201) in den Messstrahlengang (104, 907), ein Überlagern des durch den Messstrahlengang (104, 907) propagierten Teils des ersten Frequenzkammsignals (201) mit einem durch den Referenzstrahlengang (103, 908) propagierten Teil des zweiten Frequenzkammsignals (202), und ein Erfassen des Überlagerungssignals umfasst.

5. Verfahren nach Anspruch 4, wobei
im Messstrahlengang (104, 907) zumindest ein bewegtes Messobjekt enthalten ist;
im Referenzstrahlengang (103, 908) zumindest ein festes Referenzobjekt enthalten ist, und
wobei das Verfahren ferner umfasst:
ein Ermitteln der Geschwindigkeitskomponente des Messobjekts parallel zum Messstrahl anhand der Dopplerverschiebungen von spektralen Komponenten des bei der zweiten Messung detektierten Überlagerungssignals.

6. Verfahren nach Anspruch 4 oder 5, wobei die erste und die zweite Messung zeitlich nacheinander oder zeitgleich durchgeführt werden.

7. Verfahren nach einem der vorangegangenen Ansprüche, wobei
der Referenzstrahlengang (908) vollständig im Messstrahlengang (909) enthalten ist und wobei die Längen der Referenzstrecke und der Messstrecke getrennt gewonnen werden, indem eine zeitliche Fensterung des detektierten Überlagerungssignals, eine Fourieranalyse des Spektrums des Überlagerungssignals oder eine Anpassung einer Modellfunktion an das detektierte Überlagerungssignal oder dessen Spektrum durchgeführt wird; und/oder
wobei im Messstrahlengang mehrere Reflektoren (1602) enthalten sind, deren Distanzen zum Messsystem in einer Messung bestimmt werden; und/oder
wobei die verwendeten Frequenzkammquellen freilaufende Frequenzkammquellen sind.

8. Vorrichtung zur optischen Distanzmessung, umfassend
eine erste optische Frequenzkammquelle (101), welche ausgelegt ist, ein erstes Frequenzkammsignal (201) zu emittieren;
eine zweite optische Frequenzkammquelle (102), welche ausgelegt ist, ein zweites Frequenzkammsignal (202) zu emittieren, wobei sich die Linienabstände des ersten Frequenzkammsignals und des zweiten Frequenzkammsignals voneinander unterscheiden;
einen Referenzstrahlengang (103, 908);
einen Messstrahlengang (104, 907);
eine Detektionseinrichtung (105, 106), welche derart ausgelegt ist, um Überlagerungssignale der Frequenzkämme im Basisband zu erfassen;
wobei die Vorrichtung derart ausgelegt ist, dass: zumindest ein Teil des ersten Frequenzkammsignals (201) und ein Teil des zweiten Frequenzkammsignals (202) im Referenzstrahlengang (103, 908) überlagert werden, wobei das durch den Referenzstrahlengang (103, 908) propagierte Überlagerungssignal von der Detektionseinrichtung (105) erfasst wird; und

zumindest ein anderer Teil des ersten Frequenzkammsignals (201) und zumindest ein anderer Teil des zweiten Frequenzkammsignals (202) überlagert und zur Interferenz gebracht werden, wobei das Überlagerungssignal in den Messstrahlengang (104, 907) eingekoppelt wird und durch den Messstrahlengang (104, 907) propagiert, und wobei das von einem Messobjekt reflektierte, durch den Messstrahlengang propagierte Überlagerungssignal von der Detektionseinrichtung (106) erfasst wird.

9. Vorrichtung nach Anspruch 8, ferner umfassend

eine Datenverarbeitungseinheit (108, 408, 708, 904), welche ausgelegt ist, den Wegunterschied zwischen dem Referenzstrahlengang (103, 908) und dem Messstrahlengang (104, 907) aus den detektierten Überlagerungssignalen zu ermitteln; und/oder

eine Verzweigungseinheit (107), welche ausgelegt ist, zumindest einen Teil des zweiten Frequenzkammsignals zumindest teilweise dem Messstrahlengang und zumindest teilweise der Detektionseinrichtung (106) zuzuführen.

10. Vorrichtung nach Anspruch 9, wobei die Vorrichtung eine Verzweigungseinheit (107) umfasst und die Verzweigungseinheit (107)

zumindest einen optischen Leistungsteiler (407); und/oder

zumindest ein optisches Filter (707), welches derart ausgelegt ist, um zumindest einen Teil des zweiten Frequenzkammsignals (202) spektral in zumindest einen ersten und einen zweiten Anteil aufzuteilen; und/oder

zumindest einen optischen Schalter (607), wobei in einer ersten Stellung des optischen Schalters (607) zumindest ein Teil des zweiten Frequenzkammsignals (202) dem Messstrahlengang (104, 907) zugeführt wird, und in einer zweiten Stellung des optischen Schalters zumindest ein Teil des zweiten Frequenzkammsignals (202) der Detektionseinrichtung (106) zugeführt wird

umfasst.

11. Vorrichtung nach Anspruch 10, wobei die Verzweigungseinheit einen optischen Schalter umfasst und die Detektionseinrichtung (106) einen differentiellen Detektor umfasst, dessen Ausgangssignale für die verschiedenen Stellungen des optischen Schalters (607) getrennt auslesbar sind.

12. Vorrichtung nach einem der Ansprüche 8 bis 11, wobei die Vorrichtung ferner derart ausgelegt ist, dass der der Detektionseinrichtung (106) zugeführte Anteil des zweiten Frequenzkammsignals mit zumindest einem Teil des durch den Messstrahlengang propagierten ersten Frequenzkammsignals (201) überlagert wird, wobei das entstehende Überlagerungssignal durch die Detektionseinrichtung erfasst wird.

13. Vorrichtung nach einem der Ansprüche 8 bis 12, wobei

die Detektionseinrichtung (105, 106) mehrere getrennte Detektoren und/oder zumindest einen differentiellen Detektor, dessen Summen- und Differenzsignal getrennt auslesbar sind, umfasst; und/oder

wobei der Referenzstrahlengang (908) vollständig im Messstrahlengang (909) enthalten ist; und/oder

wobei der ausgesandte Messstrahl mehrere Reflektoren trifft, deren Distanzen zum Messsystem in einer Messung bestimmt werden.

14. Vorrichtung nach einem der Ansprüche 8 bis 13, wobei

der Messstrahlengang (104, 907) zumindest ein bewegtes Messobjekt enthält;

der Referenzstrahlengang (103, 908) ein festes Referenzobjekt enthält,

wobei die Vorrichtung ferner derart ausgelegt ist, dass

zumindest ein Teil des ersten Frequenzkammsignals (201) durch den Messstrahlengang (104, 907) propagiert und am Messobjekt reflektiert wird; der am Messobjekt reflektierte Teil des ersten Frequenzkammsignals (201) mit einem durch den Referenzstrahlengang (103, 908) propagierten und am Referenzobjekt reflektierten Teil des zweiten Frequenzkammsignals (202) überlagert wird, wobei das Überlagerungssignal von der Detektionseinrichtung (106) erfasst wird, und

wobei die Vorrichtung eine Datenverarbeitungseinheit (108, 408, 708, 904) umfasst und die Datenverarbeitungseinheit derart ausgelegt ist, die relative Geschwindigkeit des zumindest einen Messobjekts bezüglich des Referenzobjekts aus der Dopplerverschiebung von spektralen Komponenten des erfassten Überlagerungssignals zu ermitteln.

15. System zur Messung räumlicher Koordinaten zumindest eines Messobjekts umfassend mindestens eine Vorrichtung zur Distanzmessung nach einem der Ansprüche 8 bis 14.

16. Verwendung des Verfahrens nach einem der Ansprüche 1 bis 7 zur Messung räumlicher Koordinaten zumindest eines Messobjekts.

**Claims**

1. A method for optical distance measurement, comprising:

   generating a first and a second frequency comb signal (201, 202), wherein the first and the second frequency comb signal (201, 202) have different line spacings;
   a reference measurement comprising superimposing at least one part of the first frequency comb signal (201) and at least one part of the second frequency comb signal (202) in a reference beam path (103, 908), and detecting the superimposition signal propagated via the reference beam path (103, 908);
   a first measurement comprising superimposing at least one other part of the first frequency comb signal (201) with at least one other part of the second frequency comb signal (202), wherein the superimposed signals are brought to a state of interference, coupling the superimposition signal into a measurement beam path (104, 907), wherein the superimposition signal propagates via the measurement beam path (104, 907), and detecting the superimposition signal reflected by a measurement object and propagated via the measurement beam path (104, 907); and

   determining the path difference between the reference beam path (103, 908) and the measurement beam path (104, 907) from the detected superimposition signals.

2. The method according to Claim 1, wherein determining the path difference comprises a spectral analysis of the detected superimposition signals, and determining the relative phase positions of selected spectral components of the detected superimposition signals; wherein the path difference between the reference beam path (103, 908) and the measurement beam path (104, 907) is determined from the determined relative phase positions.

3. The method according to Claim 1 or 2, wherein the superimposition signal propagated via the measurement beam path (104, 907) is superimposed with a third part of the second frequency comb signal (202) prior to detection.

4. The method according to any one of the preceding claims, further comprising a second measurement, wherein the second measurement comprises coupling at least one part of the first frequency comb signal (201) into the measurement beam path (104, 907), superimposing the part of the first frequency comb signal (201) propagated via the measurement beam path (104, 907) with a part of the second frequency comb signal (202) propagated via the reference beam path (103, 908), and detecting the superimposition signal.

5. The method according to Claim 4, wherein
   at least one moving measurement object is contained in the measurement beam path (104, 907);
   at least one stationary reference object is contained in the reference beam path (103, 908), and
   wherein the method further comprises:
   determining the speed component of the measurement object parallel to the measurement beam by means of the Doppler shifts of spectral components of the superimposition signal detected during the second measurement.

6. The method according to Claim 4 or 5, wherein the first and the second measurement are carried out successively in time or simultaneously.

7. The method according to any one of the preceding claims, wherein
   the reference beam path (908) is completely contained in the measurement beam path (909) and wherein the lengths of the reference route and the measurement route are obtained separately in that a temporal windowing of the detected superimposition signal, a Fourier analysis of the spectrum of the superimposition signal, or an adjustment of a model function to the detected superimposition signal, or the spectrum thereof, is carried out; and/or
   wherein a plurality of reflectors (1602) is contained in the measurement beam path, the distances of which from the measurement system are established in a measurement; and/or
   wherein the frequency comb sources used are free-running frequency comb sources.

8. A device for optical distance measurement, comprising:

a first optical frequency comb source (101) which is configured to emit a first frequency comb signal (201);

a second optical frequency comb source (102) which is configured to emit a second frequency comb signal (202), wherein the line spacings of the first frequency comb signal and the second frequency comb signal are different from one another;

a reference beam path (103, 908);

a measurement beam path (104, 907);

a detection apparatus (105, 106) which is configured to detect superimposition signals of the frequency combs in the baseband;

wherein the device is configured such that

at least one part of the first frequency comb signal (201) and one part of the second frequency comb signal (202) are superimposed in the reference beam path (103, 908), wherein the superimposition signal propagated via the reference beam path (103, 908) is detected by the detection apparatus (105); and

at least one other part of the first frequency comb signal (201) and at least one other part of the second frequency comb signal (202) are superimposed and brought to a state of interference, wherein the superimposition signal is coupled into the measurement beam path (104, 907) and is propagated via the measurement beam path (104, 907), and wherein the superimposition signal reflected by a measurement object and propagated via the measurement beam path is detected by the detection apparatus (106).

9. The device according to Claim 8, further comprising

a data processing unit (108, 408, 708, 904) which is configured to determine the path difference between the reference beam path (103, 908) and the measurement beam path (104, 907) from the detected superimposition signals; and/or

a branching unit (107) which is configured to supply at least one part of the second frequency comb signal at least partially to the measurement beam path, and at least partially to the detection apparatus (106).

10. The device according to Claim 9, wherein the device comprises a branching unit (107) and the branching unit (107) comprises

at least one optical power splitter (407); and/or

at least one optical filter (707) which is configured to spectrally split at least one part of the second frequency comb signal (202) into at least one first and one second portion; and/or

at least one optical switch (607), wherein in a first position of the optical switch (607), at least one part of the second frequency comb signal (202) is supplied to the measurement beam path (104, 907), and in a second position of the optical switch, at least one part of the second frequency comb signal (202) is supplied to the detection apparatus (106).

11. The device according to Claim 10, wherein the branching unit comprises an optical switch and the detection apparatus (106) comprises a differential detector, the output signals of which can be read out separately for the different positions of the optical switch (607).

12. The device according to any one of Claims 8 to 11, wherein the device is further configured such that the portion of the second frequency comb signal supplied to the detection apparatus (106) is superimposed with at least one part of the first frequency comb signal (201) propagated via the measurement beam path, wherein the resulting superimposition signal is detected by the detection apparatus.

13. The device according to any one of Claims 8 to 12, wherein

the detection apparatus (105, 106) comprises several separate detectors and/or at least one differential detector, the sum and difference signal of which can be read out separately; and/or

wherein the reference beam path (908) is completely contained in the measurement beam path (909); and/or

wherein the emitted measurement beam hits a plurality of reflectors, the distances of which from the measurement system are established in a measurement.

14. The device according to any one of Claims 8 to 13, wherein

the measurement beam path (104, 907) contains at least one moving measurement object;

the reference beam path (103, 908) contains a stationary reference object,

wherein the device is further configured such that

at least one part of the first frequency comb signal (201) propagates via the measurement beam path (104, 907) and is reflected on the measurement object; the part of the first frequency comb signal (201) reflected on the measurement object is superimposed with a part of the second frequency comb signal (202) propagated via the reference beam path (103, 908) and reflected on the reference object, wherein the superimposition signal is detected by the detection apparatus (106), and

wherein the device comprises a data processing unit (108, 408, 708, 904) and the data processing unit is configured to determine the relative speed of the at least one measurement object with respect to the reference object from the Doppler shift of spectral components of the detected superimposition signal.

15. A system for measuring spatial coordinates of at least one measurement object, comprising at least one device for distance measurement according to any one of Claims 8 to 14.

16. Use of the method according to any one of Claims 1 to 7 for the measurement of spatial coordinates of at least one measurement object.

**Revendications**

1. Procédé pour la mesure optique d'une distance, comportant :

une génération d'un premier et d'un deuxième signal de peigne de fréquences (201, 202), le premier et le deuxième signal de peigne de fréquences (201, 202) présentant des écarts de ligne différents ;
une mesure de référence comportant une superposition d'au moins une partie du premier signal de peigne de fréquences (201) et d'au moins une partie du deuxième signal de peigne de fréquences (202) dans un chemin optique de référence (103, 908), et une détection du signal de superposition propagé par le chemin optique de référence (103, 908) ;
une première mesure comportant une superposition d'au moins une autre partie du premier signal de peigne de fréquences (201) avec au moins une autre partie du deuxième signal de peigne de fréquences (202), les signaux superposés étant mis en interférence, un couplage du signal de superposition dans un chemin optique de mesure (104, 907), le signal de superposition étant propagé par le chemin optique de mesure (104, 907), et une détection du signal de superposition réfléchi par un objet à mesurer, propagé par le chemin optique de mesure (104, 907) ; et
une détermination de la différence de chemin entre le chemin optique de référence (103, 908) et le chemin optique de mesure (104, 907) à partir des signaux de superposition détectés.

2. Procédé selon la revendication 1, dans lequel la détermination de la différence de chemin comporte une analyse spectrale des signaux de superposition détectés et une détermination des positions de phase relatives de composantes spectrales sélectionnées des signaux de superposition détectés ; dans lequel la différence de chemin entre le chemin optique de référence (103, 908) et le chemin optique de mesure (104, 907) est déterminée à partir des positions de phase relatives déterminées.

3. Procédé selon la revendication 1 ou 2, dans lequel le signal de superposition propagé par le chemin optique de mesure (104, 907) est superposé avant la détection à une troisième partie du deuxième signal de peigne de fréquences (202).

4. Procédé selon l'une des revendications précédentes, comportant en outre une deuxième mesure, dans lequel la deuxième mesure comporte un couplage d'au moins une partie du premier signal de peigne de fréquences (201) dans le chemin optique de mesure (104, 907), une superposition de la partie du premier signal de peigne de fréquences (201) propagée par le chemin optique de mesure (104, 907) avec une partie du deuxième signal de peigne de fréquences (202) propagée par le chemin optique de référence (103, 908), et une détection du signal de superposition.

5. Procédé selon la revendication 4, dans lequel
au moins un objet de mesure déplacé est contenu dans le chemin optique de mesure (104, 907) ;
au moins un objet de référence fixe est contenu dans le chemin optique de référence (103, 908), et
dans lequel le procédé comporte en outre :
une détermination de la composante de vitesse de l'objet à mesurer parallèlement au faisceau de mesure à l'aide du décalage Doppler de composantes spectrales du signal de superposition détecté lors de la deuxième mesure.

6. Procédé selon la revendication 4 ou 5, dans lequel la première et la deuxième mesure sont réalisées consécutivement dans le temps ou simultanément.

7. Procédé selon l'une des revendications précédentes, dans lequel le chemin optique de référence (908) est contenu entièrement dans le chemin optique de mesure (909), et dans lequel les longueurs du trajet de référence et du trajet de mesure sont obtenues séparément, en réalisant un fenêtrage temporel du signal de superposition détecté, une analyse de Fourier du spectre du signal de superposition ou une adaptation d'une fonction de modèle au signal de superposition détecté ou au spectre de celui-ci ; et/ou dans lequel plusieurs réflecteurs (1602) sont contenus dans le chemin optique de mesure, dont les distances par rapport au système de mesure sont définies dans une mesure ; et/ou dans lequel les sources de peigne de fréquences utilisées sont des sources de peigne de fréquences libres.

8. Dispositif pour la mesure optique d'une distance, comportant :

    une première source optique de peigne de fréquences (101), laquelle est conçue pour émettre un premier signal de peigne de fréquences (201) ;
    une deuxième source optique de peigne de fréquences (102), laquelle est conçue pour émettre un deuxième signal de peigne de fréquences (202), les écarts de ligne du premier signal de peigne de fréquences et du deuxième signal de peigne de fréquences étant différents l'un de l'autre ;
    un chemin optique de référence (103, 908) ;
    un chemin optique de mesure (104, 907) ;
    un dispositif de détection (105, 106) conçue de façon à détecter des signaux de superposition des peignes de fréquences dans la bande de base ;
    dans lequel le dispositif est conçu de telle façon que
    au moins une partie du premier signal de peigne de fréquences (201) et une partie du deuxième signal de peigne de fréquences (202) sont superposées dans le chemin optique de référence (103, 908), le signal de superposition propagé par le chemin optique de référence (103, 908) étant détecté par le dispositif de détection (105) ; et
    au moins une autre partie du premier signal de peigne de fréquences (201) et au moins une autre partie du deuxième signal de peigne de fréquences (202) sont superposées et mises en interférence, le signal de superposition étant couplé dans le chemin optique de mesure (104, 907) et propagé par le chemin optique de mesure (104, 907), et le signal de superposition réfléchi par un objet à mesurer et propagé par le chemin optique de mesure est détecté par le dispositif de détection (106).

9. Dispositif selon la revendication 8, comportant en outre une unité de traitement de données (108, 408, 708, 904), laquelle est conçue pour déterminer une différence de chemin entre le chemin optique de référence (103, 908) et le chemin optique de mesure (104, 907) à partir des signaux de superposition détectés ; et/ou une unité de branchement (107), laquelle est conçue pour fournir au moins une partie du deuxième signal de peigne de fréquences au moins partiellement au chemin optique de mesure et au moins partiellement au dispositif de détection (106) .

10. Dispositif selon la revendication 9, dans lequel le dispositif comporte une unité de branchement (107) et l'unité de branchement (107) comporte au moins un diviseur de puissance optique (407) ; et/ou au moins un filtre optique (707), lequel est conçu de manière à diviser au moins une partie du deuxième signal de peigne de fréquences (202) de façon spectrale en au moins une première et une deuxième fraction ; et/ou au moins un commutateur optique (607), au moins une partie du deuxième signal de peigne de fréquences (202) étant fournie au chemin optique de mesure (104, 907) dans une première position du commutateur optique (607), et au moins une partie du deuxième signal de peigne de fréquences (202) étant fournie au dispositif de détection (106) dans une deuxième position du commutateur optique.

11. Dispositif selon la revendication 10, dans lequel l'unité de branchement comporte un commutateur optique et le dispositif de détection (106) comporte un détecteur différentiel, dont les signaux de sortie peuvent être lus séparément pour les différentes positions du commutateur optique (607).

12. Dispositif selon l'une des revendications 8 à 11, dans lequel le dispositif est en outre conçu de telle façon que la fraction du deuxième signal de peigne de fréquences fournie au dispositif de détection (106) est superposée à au moins une partie du premier signal de peigne de fréquences (201) propagé par le chemin optique de mesure, le signal de superposition produit étant détecté par le dispositif de détection.

**13.** Dispositif selon l'une des revendications 8 à 12, dans lequel
le dispositif de détection (105, 106) comporte plusieurs détecteurs séparés et/ou au moins un détecteur différentiel, dont les signaux de somme et de différence peuvent être lus séparément ; et/ou
dans lequel le chemin optique de référence (908) est entièrement contenu dans le chemin optique de mesure (909) ; et/ou
dans lequel le faisceau de mesure envoyé rencontre plusieurs réflecteurs, dont les distances par rapport au système de mesure sont déterminées dans une mesure.

**14.** Dispositif selon l'une des revendications 8 à 13, dans lequel
le chemin optique de mesure (104, 907) contient au moins un objet à mesurer déplacé ;
le chemin optique de référence (103, 908) contient un objet de référence fixe,
dans lequel le dispositif est en outre conçu de telle façon que
au moins une partie du premier signal de peigne de fréquences (201) est propagée par le chemin optique de mesure (104, 907) et réfléchie sur l'objet à mesurer ; la partie du premier signal de peigne de fréquences (201) réfléchie sur l'objet à mesurer est superposée à une partie du deuxième signal de peigne de fréquences (202) propagée par le chemin optique de référence (103, 908) et réfléchie sur l'objet de référence, le signal de superposition étant détecté par le dispositif de détection (106), et
dans lequel le dispositif comporte une unité de traitement de données (108, 408, 708, 904) et l'unité de traitement de données est conçue de façon à déterminer la vitesse relative de l'au moins un objet à mesurer par rapport à l'objet de référence à partir du décalage Doppler de composantes spectrales du signal de superposition détecté.

**15.** Système destiné à mesurer des coordonnées spatiales d'au moins un objet à mesurer, comportant au moins un dispositif destiné à mesurer une distance selon l'une des revendications 8 à 14.

**16.** Mise en oeuvre du procédé selon l'une des revendications 1 à 7, pour la mesure de coordonnées spatiales d'au moins un objet à mesurer.

## Fig. 1

## Fig. 2

**Fig. 3**

**Fig. 4**

**Fig. 5**

**Fig. 6**

**Fig. 7**

EP 2 810 017 B1

**Fig. 8**

EP 2 810 017 B1

32

Fig. 9

Spectral
Power
Density

Fig. 10

**Fig. 11**

EP 2 810 017 B1

1001

$I_1$-$I_2$

1004

1003

1002

0

$1/\Delta f_r$

t

Fig. 12

Amplitude

1102

1101

0

$L_{ref}/c$

$L_{meas}/c$

$L_k/c$

Fig. 13

**Fig. 14**

Fig. 15

**Fig. 16**

Fig. 17

Fig. 18

**Fig. 19**

**Fig. 20**

**IN DER BESCHREIBUNG AUFGEFÜHRTE DOKUMENTE**

**In der Beschreibung aufgeführte Patentdokumente**

• EP 2182319 A1

**In der Beschreibung aufgeführte Nicht-Patentliteratur**

• **CODDINGTON.** *Nature Photon,* vol. 3 (6), 351-356